# EUROPEAN PATENT SPECIFICATION

(11) **EP 4 498 144 B1**
(45) Date of publication and mention of the grant of the patent: **11.11.2026**
(21) Application number: 23188197.0
(22) Date of filing: 27.07.2023
(51) Int. Cl.: G02B 26/08, G02B 5/02, G02B 5/136, G02B 5/20, G02B 26/00, G02B 5/22

(54) **BEAM DEFLECTION DEVICE AND SPECTRAL FILTER DEVICE**
STRAHLABLENKVORRICHTUNG UND SPEKTRALFILTERVORRICHTUNG
DISPOSITIF DE DÉVIATION DE FAISCEAU ET DISPOSITIF DE FILTRE SPECTRAL

(43) Date of publication of application: 29.01.2025
(73) Proprietor: Technische Hochschule Deggendorf, in Vertretung des Freistaates Bayern, 94469 Deggendorf (DE)
(72) Inventor: WAGNER, Michael, Regen (DE)
(74) Representative: Pearl Cohen EU

(56) References cited:
- WO-A1-2021/162958
- US-A1- 2013 038 826
- US-B1- 8 228 582

## Description

Provided are a beam deflection device, a method for deflecting a beam, a use of a beam deflection device, a spectral filter device and a multispectral camera. The embodiments are, thus, related to optical components.

In optical setups it is often required to change the properties of a light beam, i.e. to vary one or more of its characteristics e.g. power or intensity. For example, in some applications it is desirable to attenuate the power of a light beam, such as a laser beam, which is conventionally achieved by inserting a neutral density filter glass. However, if the filter glass is not arranged perfectly perpendicular to the beam, the filter glass might cause a shift of the beam propagation path. Moreover, if the filter glass is not perfectly flat, a change in the beam's propagation direction due to refraction may occur. Hence, altering a characteristic of a beam often comes along with undesired changes to the beam path and the propagation direction of the beam.

For instance, laser line interference filters allow spectrally filtering a spectral range of only few nanometers of an incident spectrum in transmission. The center wavelength of the transmitted spectral range may be tuned in a certain range by tilting the laser line interference filter with respect to the propagation direction of the incident beam. However, this typically causes an offset of the propagation path of the transmitted beam with respect to the incident beam which depends on the tilt angle of the laser line interference filter. Beam offset may then require further adjustment of other optical elements.

In principle, reflectors are known in prior art that allow reflecting and deflecting a beam by a predetermined angle. However, these reflectors do not allow a purposeful altering of a characteristic of the beam but merely reflect the beam while maintaining the overall beam's characteristics beside the propagation path of the beam. In some cases, retroreflectors have been described in prior art using a modulation device for modulating the reflectivity of the retroreflectors' mirrors and/or modifying the arrangement of the mirrors of the retroreflectors with respect to each other in order to modulate an intensity of the reflected light. Such a retroreflector is described for instance in DE 10 2014 209 901 A1.

Moreover, US 8,228,582 B1 describes a retro-reflective apparatus having a modulation capability, wherein a distance between a pair of reflective surfaces is varied in order to modulate the reflectivity of the device. In addition, reflection prisms are conventionally known, such as penta prisms, Bauernfeind prisms and 180° inverting prisms.

WO 2021/162958 A1 dsicloses a scanner system and a method having adjustable path length with constant input and output optical axes.

US 2013/0038826 A1 discloses an optical system.

Usually, prisms are made of glass and used in air. The refraction between air and prism may be negligible if only small angles of incidence are considered. For beam deflection per se, the manufacture of the prisms from glass is not a prerequisite. The working principle of reflection prisms is mainly governed by two mirror surfaces being arranged at a fixed dihedral angle with respect to each other. For instance, a mirror surface arrangement of two mirrors with an angle of 90° between the mirror surfaces generates a nominal beam deflection of 180° and is a common optical component known as a 180° inverting prism. The nominal deflection provided by all prisms or mirror surface arrangements is twice the angle between the mirror surfaces. The formula may alternatively be given as 360° minus twice the dihedral angle. A deflection of 90° from the beam path can be achieved with a pentaprism with a mirror surface angle of 45°. Alternatively, a prism with a mirror surface angle of 135° can be used. The deflection is then 270°, i. e. from a practical point of view also 90°. The beam deflection determined by the mirror surface angle of such reflection prisms is independent of the angle of incidence of the light beam entering the mirror surface arrangement. Many applications therefore do not require an exact alignment of such reflection prisms which may be one of the main reasons for the popularity of such prisms for beam deflection. Although such conventional prisms are usable for beam deflection they do not allow purposefully altering a characteristic of the reflected beam besides its propagation direction.

It is, thus, desirable to provide a beam deflection device for altering a characteristic of a beam while maintaining the propagation path and path length of the beam unchanged by said alteration.

This problem is solved by a beam deflection device, a method for deflecting a beam, a spectral filter device and a multispectral camera having the features of the respective independent claims. Optional features and preferred embodiments are provided in the dependent claims and the description.

In a first aspect, a beam deflection device for deflecting a beam is provided. The beam deflection device comprises multiple reflection surfaces having a predetermined relative orientation with respect to each other, wherein the beam deflection device is configured to be tiltable around an optical center of the beam deflection device such that the predetermined relative orientation of the multiple reflection surfaces is maintained, and wherein the relative orientation of the multiple reflection surfaces is adjusted to cause a predetermined deflection angle for the deflected beam. The beam deflection device is characterized in that the beam deflection device is configured such that when the beam deflection device is tilted around the optical center within a predetermined angular range of a tilt angle, a change of the geometric properties of the outcoupled beam, i.e. position in space, propagation direction and path length, is zero or limited to a predetermined maximum deviation.

A person skilled in the art is aware of the fact that light or electromagnetic waves in general can be described with geometrical (ray) optics or physical (wave) optics. Wave optics may account for physical phenomena which are not accounted for in ray optics e.g. penetration depths in metal reflectors or dielectric layer stacks. A person skilled in the art will know that for many applications of the beam deflection device the difference between wave and ray optics are negligible. A person skilled in the art may take into account that the optical center may differ slightly when it is derived from wave or ray optics simulations and may account a margin of five wavelengths for this difference, i.e. a few microns for light. A person skilled in the art may be satisfied to know that deviations of the geometric properties of the outcoupled beam over a predetermined angular range of a tilt angle is limited to a predetermined maximum deviation which accounts also for the differences between ray and wave optics. A person skilled in the art may know that fabrication errors in optical surfaces and rotation axes may have a greater influence on beam propagation and optical quality than the differences between ray and wave optics.

In a further aspect a beam deflection device for deflecting a beam by a predetermined deflection angle is provided. The beam deflection device comprises a first reflection surface extending in a first reflection plane and a second reflection surface extending in a second reflection plane, wherein the first reflection plane and the second reflection plane have a common intersection axis and are arranged such that an opening angle enclosed between the first reflection plane and the second reflection plane corresponds to half of the predetermined deflection angle. The beam deflection device is configured to be tiltable around said common intersection axis by a tilt angle. Moreover, the beam deflection device is configured such that at least one of the multiple reflection surfaces, i. e. at least one of the first reflection surface and the second reflection surface, comprises a functionality for altering a characteristic of the reflected beam depending on the tilt angle.

In another aspect a method for deflecting a beam by a predetermined deflection angle is provided. The method comprises coupling the beam into a beam deflection device having multiple reflection surfaces having a predetermined relative orientation with respect to each other, wherein the beam deflection device is configured to be tiltable around an optical center of the beam deflection device such that the predetermined relative orientation of the multiple reflection surfaces is maintained, and wherein the relative orientation of the multiple reflection surfaces is adjusted to cause a predetermined deflection angle for the deflected beam.. The beam deflection device is characterized in that the beam deflection device is configured such that when the beam deflection device is tilted around the optical center within a predetermined angular range of a tilt angle, a change of the geometric properties of the outcoupled beam, i.e. position in space, propagation direction and path length, is zero or limited to a predetermined maximum deviation. At least one reflection surface of the multiple reflection surfaces comprises a functionality for altering a characteristic of the reflected beam depending on the tilt angle of the beam deflection device around the optical center. The method further comprises outcoupling the beam from the beam deflection device at the predetermined deflection angle with respect to the beam coupled into the beam deflection device. The method further comprises, prior to the outcoupling, a step of altering a characteristic of the reflected beam by adjusting an incoupling angle of the beam into the beam deflection device by tilting the beam deflection device by a tilt angle around the optical center, wherein the deflection angle of the outcoupled beam is independent of the tilt angle of the beam deflection device around the optical center.

In another aspect a method for deflecting a beam by a predetermined deflection angle is provided. The method comprises coupling the beam into a beam deflection device having a first reflection surface extending in a first reflection plane and a second reflection surface extending in a second reflection plane, wherein the first reflection plane and the second reflection plane have a common intersection axis and are arranged such that an opening angle enclosed between the first reflection plane and the second reflection plane corresponds to half of the predetermined deflection angle. The method further comprises outcoupling the beam from the beam deflection device at the predetermined deflection angle with respect to the beam coupled into the beam deflection device. The method further comprises, prior to the outcoupling, a step of altering a characteristic of the reflected beam by adjusting an incoupling angle of the beam into the beam deflection device by tilting the beam deflection device by a tilt angle around said common intersection axis, wherein the deflection angle of the outcoupled beam is independent of the tilt angle of the beam deflection device.

In yet another aspect a spectral filter device for spectrally filtering and deflecting a beam by a predetermined deflection angle is provided. The spectral filter device comprises a beam deflection device according to the disclosure, wherein the spectral filter device is configured to vary the spectral filtering of the beam by tilting the beam deflection around the optical center of the beam deflection device with respect to a propagation axis of the beam.

In yet another aspect a spectral filter device for spectrally filtering and deflecting a beam by a predetermined deflection angle is provided. The spectral filter device comprises a first spectral filter arrangement having a first reflection surface extending in a first reflection plane and a second reflection surface extending in a second reflection plane, wherein the first reflection plane and the second reflection plane have a common intersection axis and are arranged such that an opening angle enclosed between the first reflection plane and the second reflection plane corresponds to half of the predetermined deflection angle. Moreover, the spectral filter device further comprises a second spectral filter arrangement having a third reflection surface extending in a third reflection plane and a fourth reflection surface extending in a fourth reflection plane, wherein the third reflection plane and the fourth reflection plane intersect in said common intersection axis and are arranged such that an opening angle enclosed between the third reflection plane and the fourth reflection plane corresponds to half of the predetermined deflection angle. The spectral filter device is characterized in that at least one of the first reflection surface and the second reflection surface comprises spectrally selective reflection properties such that the first spectral filter arrangement is configured to isolate a first spectral range as the reflected beam. At least one of the third reflection surface and the fourth reflection surface comprises spectrally selective reflection properties such that the second spectral filter arrangement is configured to isolate a second spectral range as the reflected beam, wherein the second spectral range is different from the first spectral range. In addition, the spectral filter device is configured to be tiltable around said ommon intersection axis to alternatively couple the beam into the first spectral filter arrangement or into the second spectral filter arrangement.

In yet another aspect a multispectral camera for sequentially capturing images at different spectral ranges is provided, characterized in that the multispectral camera comprises at least one spectral filter device according to the disclosure for spectrally filtering the light to be captured as the image.

A beam according to the disclosure is a beam which obeys the laws of reflection, in particular an electromagnetic beam, especially a beam of light, i. e. a light ray or a bundle of light rays. The beam may comprise a collimated bundle of light rays and/or a converging and/or a diverging bundle of light rays. The beam may comprise electromagnetic radiation of any kind of wavelength, such as radiation in the ranges of Gigahertz, Terahertz, infrared, visible, ultraviolet, and/or X-ray spectral range. The beam may also comprise other particles e.g. electrons.

A beam deflection device is a device configured to change the propagation path of an incoming beam by a predetermined deflection angle, wherein the predetermined deflection angle may be defined by the beam deflection device and in particular by the arrangement of the reflection planes and in particular by the opening angle enclosed between the reflection planes. The beam deflection device offers a constant deflection of the beam with respect to the propagation direction of the beam impinging on the beam deflection device essentially independent of the tilt angle of the beam deflection device and in particular of the reflection planes with respect to the propagation direction of the beam impinging on the beam deflection device while essentially maintaining the geometric properties of the outcoupled beam. "Essentially independent of the tilt angle" in this context means that the deflection angle is not affected by the tilt angle in a predetermined angular range of the tilt angle or that a dependence of the deflection angle of the tilt angle is limited to a predetermined maximum deviation. The beam deflection device may be configured such as to minimize the predetermined maximum deviation. The predetermined maximum deviation may result in a negligible dependence of the deflection angle of the tilt angle.

"Essentially maintaining the geometric properties of the outcoupled beam" in this context means that the position in space, propagation direction and path length of the outcoupled beam is not affected by the tilt angle in a predetermined angular range of the tilt angle or that the dependence of the geometric properties is limited to a predetermined maximum deviation. The predetermined maximum deviation may result in a negligible dependence of the geometric properties of the tilt angle.

A reflection surface is a surface of the beam deflection device reflecting the beam coupled into the beam deflection device. The reflection surface may for instance be provided by a reflectively coated surface. Alternatively, the reflection surface may be formed by a multilayer structure and/or a reflectivity provided by bulk medium having holographic properties, to which an effective reflection surface may be attributed. The reflection surface is a plane surface extending in a respective reflection plane, wherein the spatial extensions of the reflection surface may be limited.

An optical center of the beam deflection device may correspond to a rotational center of the beam deflection device. The optical center may relate to an axis or a point inside or outside of the beam deflection device, i. e. the optical center does not necessarily have to be located within the beam deflection device. The optical center may relate to a virtual or an imaginary axis or point. In other words, the optical center does not necessarily have to correspond to particular contractual means at the location of the optical center. The reflection surfaces are arranged with respect to each other in such a manner that tilting the beam deflection device around the optical center does not alter their relative arrangement. The multiple reflection surfaces or some of the multiple reflection surfaces may intersect or touch each other in the optical center, which, however, is not necessarily required.

A common intersection axis is an axis in three-dimensional space at which the first reflection plane and the second reflection plane and possibly further reflection planes intersect with each other. It is emphasized that it is not required that the reflection surfaces extend until the common intersection axis (i.e. that the reflection surfaces as such intersect with each other at the common intersection axis), although according to some embodiments this may be the case. However, according to some embodiments, the reflection surfaces do not extend before/up to the common intersection axis but are spaced apart from the intersection axis. In each reflection plane a reflection surface may be provided. However, optionally some reflections at a reflection plane may be achieved by providing a roof reflector and/or a retroreflector having more than one reflection surface which may not extend within the reflection plane itself. The reflection of the beam at such a roof reflector or retroreflector may be regarded as a reflection at an associated reflection plane.

In some embodiments, the common intersection axis marks the intersection line of the first reflection plane and the second reflection plane and in addition defines a rotational axis for tilting the beam deflection device to alter the characteristic of the reflected beam depending on the tilt angle. Thus, according to some embodiments, the optical center may correspond to the common intersection axis. Tilting or rotating the beam deflection device means that elements of the beam deflection device, which reflect and deflect the beam, in particular the reflection surfaces, are tilted or rotated (while keeping the respective opening angle enclosed between two adjacent reflection planes constant). This does not exclude that the beam deflection device comprises one or more further components which are not tilting, rotating and/or moving when the beam deflection device is considered as tilting or rotating or moving. Such further components may in particular comprise a support element supporting the reflection surfaces in a rotatable manner around the common intersection axis.

An opening angle between the first reflection plane and the second reflection plane is a fixed angle, i. e. said opening angle is not changed for altering a characteristic of the reflected beam. However, according to some embodiments the beam deflection device may allow modifications to provide different predetermined deflection angles by changing the opening angle. The opening angle corresponding to half of the predetermined deflection angle means that the predetermined deflection angle has twice the size of the opening angle.

A tilt angle indicates the angle, by which the beam deflection device, in particular the first reflection plane and the second reflection plane, are tilted around the optical center with respect to a predetermined normal position. The normal position may be individually set for each beam deflection device. For instance, the normal position may be chosen such that a beam coupled into the beam deflection device intersects with the first reflection surface in a central area of the first reflection surface. The intersection point of the beam and the first reflection surface will vary when tilting the beam deflection device around the optical center.

A reflection surface having a functionality for altering a characteristic of the reflected beam depending on the tilt angle means that the reflection surface is configured to alter one or more characteristics of the beam when reflecting the beam. Such a functionality may be provided by means of one or more optical coatings on at least a part of the reflection surface and or by providing the reflection surface by means of a bulk element having specific bulk properties resulting in a reflection of the beam at an effective reflection surface. The characteristic may for instance comprise one or more parameters or properties of the beam, such as its power and/or intensity and/or spectral range and/or central wavelength and/or polarization type and/or polarization direction.

The disclosure provides the advantage that it allows altering a characteristic of the beam (e.g. power, intensity) by varying the tilt angle of the beam deflection device while essentially maintaining the beam propagation path and the overall path length of the deflected beam. Due to the fixed opening angle enclosed between the reflection planes and the common intersection axis forming the rotation axis for tilting the beam deflection device, the predetermined deflection angle with respect to the propagation direction of the beam coupled into the beam deflection device is maintained even when the propagation path of the beam within the beam deflection device, and in particular between the multiple reflection surfaces, is changed. Hence, the disclosure combines the advantages of conventional reflective optical components for beam alteration, such as for instance spectral filters, neutral density filters and/or polarizers, with the advantages of beam deflection devices for deflecting a beam in a constant manner independently of the precise orientation of the beam deflection device. Accordingly, the disclosure allows altering one or more beam characteristics without distorting beam propagation.

In addition, the disclosure provides the advantage that the beneficial properties are not solely applicable to collimated beams but also to convergent and/or divergent radiation without changing the convergence/divergence properties. Accordingly, a device according to the disclosure may be implemented in an existing optical setup without the need of reconfiguring the convergence/divergence control of the beam. Moreover, a device according to the disclosure may be implemented in an imaging path, as the beam may be imaged while propagating through a device according to the disclosure.

The multiple reflection surfaces may comprise a first reflection surface extending in a first reflection plane and a second reflection surface extending in a second reflection plane. The first reflection surface and the second reflection surface may correspond to the first reflection surface and the second reflection surface already mentioned above. The first reflection plane and the second reflection plane may have a common intersection axis and may be arranged such that an opening angle enclosed between the first reflection plane and the second reflection plane may correspond to half of the predetermined deflection angle. The optical center may correspond to or may be based on the common intersection axis. This may provide a particular effective layout for a beam deflection device having a low technical complexity.

The multiple reflection surfaces may comprise at least one roof reflector having two reflection surfaces intersecting in a roof reflector intersection axis. The multiple reflection surfaces may optionally comprise two roof reflectors each having two reflection surfaces intersecting in a respective roof reflector intersection axis, wherein the roof intersection axes of the two roof reflectors intersect in an intersection point, and wherein the optical center corresponds to or is based on the intersection point. This may allow providing a beam deflection device with up to four reflective surfaces, where each surface may have a functionality for altering a characteristic of the beam.

The characteristic of the reflected beam altered by the functionality of the at least one reflection surface of the multiple reflection surfaces may comprise one or more of the following beam properties: a spectral range of the reflected beam, a central wavelength of the reflected beam, a diffraction pattern of the reflected beam, a polarization type of the reflected beam, a polarization direction of the reflected beam, and a power and/or intensity of the reflected beam. In particular, the alteration of a characteristic of the reflected beam altered by the functionality of the first and/or second reflection surface does not include and does not come with a change of the propagation path of the exiting beam besides the intended deflection by the deflection device. This allows altering one or more of the above-identified parameters of the beam while maintaining the propagation direction, geometric path length and propagation path of the beam.

The beam deflection device may be configured such that the functionality of at least one reflection surface of the multiple second reflection surfaces for altering a characteristic of the reflected beam depends on a tilt angle by which the beam deflection device is tilted around the common intersection axis/the optical center. This facilitates an adjusting to the alteration of a characteristic of the beam by simply mechanically tilting the beam deflection device around the common intersection axis/the optical center. Moreover, as tilting the beam deflection device around the common intersection axis/the optical center does not alter the propagation path of the reflected beam, the propagation path, the path length and the propagation direction can be maintained unchanged when altering a characteristic of the beam.

The beam deflection device may be further configured such that the functionality of the at least one reflection surface of the multiple second reflection surfaces for altering a characteristic of the reflected beam depends on the position at which the beam intersects with the at least one reflection surface of the multiple reflection surfaces. The functionality of the at least one reflection surface may vary over different positions/sections of the respective reflection surface. Hence, the functionality experienced by a reflected beam may depend on the exact position on the at least one reflection surface at which the beam impinges and is reflected. This may allow varying the alteration of a characteristic of the reflected beam by adjusting the position at which the beam intersects with the at least one reflection surface, which may be achieved by adjusting a translational position of the beam deflection device with respect to the propagation path of the incoming beam and/or by adjusting a tilt angle of the beam deflection device.

The functionality for altering a characteristic of the reflected beam is provided by one or more of the following functional elements comprised by the at least one reflection surface of the multiple reflection surfaces: an interference arrangement, preferably comprising several interference layers, a spectral interference filter element, preferably comprising a metal interference filter element, a dichroic mirror, a diffractive element, preferably comprising a grating arranged at the respective reflection surface and/or a holographic volume grating, a refractive element having a predetermined refractive index, and an absorption element. An interference arrangement may for instance be provided as a multilayer structure having predetermined reflection and/or transmission characteristics. A spectral interference filter element may be configured to be only reflective within a predetermined spectral range and/or at a predetermined wavelength at certain incidence angles. A diffractive element may be provided as a grating structure at the respective reflection surface. Alternatively, or additionally, a reflection surface may be provided by a diffractive volume structure, such as a holographic Bragg grating. In particular, the one or more functional elements may be adjusted to have properties depending on the angle of incidence at which the incoming beam intersects with the respective reflection surface. This may allow adjusting the properties of the functional element(s) by varying the tilting angle of the beam deflection device. This variety of functional elements allows adjusting the at least one reflective surface of the multiple reflection surfaces to have individualized properties for the desired application. All features disclosed with reference to the at least one reflection surface may apply in the same manner to possible further reflection surfaces of the multiple reflection surfaces of the beam deflection device.

At least one functional element arranged at or comprised by the at least one reflection surface of the multiple reflection surfaces may cover only a part of the respective reflection surface or may cover the entire respective reflection surface. This may allow selecting, by tilting the beam deflection device, whether the beam impinges on the functional element(s) at the at least one reflection surface or not and, thus, altering the functional property(ies) of the reflection surface(s) experienced by the reflected beam.

A reflection surface may comprise more than one functional element. For instance, in a first part of a reflection surface an interference arrangement may be provided and in a second part of said reflection surface an absorber may be provided. This may allow that within a first tilt angle range, an incident beam impinging on said first part of the reflection surface is reflected while within a second tilt angle range an incident beam impinging on said second part of the reflection surface is at least partly absorbed, for instance by essentially blocking the beam. Other functional elements may be used for adjusting the power of the reflected beam and/or for adjusting the polarization angle of the reflected beam. A transmitted part of an at least partly absorbed beam may allow measuring the power of the beam behind the reflection surface.

The beam deflection device may comprise one or more reflection surfaces configured to transmit a part of the beam which is not reflected. For instance, spectral filtering may be carried out by reflecting only a predetermined spectral part of the beam, which may depend on the tilt angle, while the remaining spectral parts may be transmitted through the respective reflection surface.

Moreover, the beam deflection device may be configured to provide cooling of at least one of the reflection surfaces. This may be useful for using the beam deflection device in applications with high-power laser beams. In this case, the beam deflection device may be configured to allow accessing at least one of the reflection surfaces from the back with cooling means, such as cooling pipes or fans.

The predetermined angle by which the beam deflection device may deflect the beam may be within a range from 20° to 350°. Accordingly, the opening angle enclosed between the first reflection plane and the second reflection plane may be within a range from 10° to 175°. In particular, the predetermined deflection angle may be 180° such as in an inverting prism or in a retroreflector. Accordingly, the opening angle enclosed between the first reflection surface and the second reflection surface of the multiple reflection surfaces may be set to 90°.

The beam deflection device may further comprise an additional reflective surface, wherein the first reflection surface and the second reflection surface of the multiple reflection surfaces and the additional reflective surface form a corner reflector. In other words, according to some embodiments the first reflection surface and the second reflection surface may form part of a corner reflector. This may allow a reliable retroreflection being invariant against three-dimensional variations of the propagation direction of the beam.

The beam deflection device may further comprise a third reflection surface of the multiple reflection surfaces extending in a third reflection plane and a fourth reflection surface of the multiple reflection surfaces extending in a fourth reflection plane, wherein the third reflection plane and the fourth reflection plane intersect in the optical center, which may correspond to or be based on the common intersection axis of the first reflection plane and the second reflection plane and are arranged such that an opening angle enclosed between the third reflection plane and the fourth reflection plane corresponds to half of the predetermined deflection angle. At least one of the third reflection surface and the fourth reflection surface comprises a functionality for altering a characteristic of the reflected beam, wherein the beam deflection device is adapted to allow coupling the beam alternatively to the first and second reflection surfaces or to the third and fourth reflection surfaces by tilting the beam deflection device around the optical center, which may be the common intersection axis. This may extend the possible use of the beam deflection device to offer at least two different functionalities, wherein a first functionality is provided by the first and second reflection surfaces and a second functionality is provided by the third and fourth reflection surfaces. The two functionalities may for instance be provided by different functional elements provided at or comprised by the respective reflection surfaces. A user may change between the provided functionalities by simply rotating the beam deflection device around the optical center and by this to select whether the beam is coupled into the section comprising the first and second reflection surfaces or into the section comprising the third and fourth reflection surfaces. The functionality for altering a characteristic of the reflected beam of the third reflection surface and/or of the fourth reflection surface may, thus, differ from the functionality for altering a characteristic of the reflected beam of the first reflection surface and/or of the second reflection surface.

The beam deflection device may further comprise two additional reflection surfaces of the multiple reflection surfaces, wherein the third reflection surface and the fourth reflection surface and one of the additional reflection surfaces form a corner reflector. In other words, according to some embodiments the third reflection surface and the fourth reflection surface may form part of a corner reflector. This may allow a reliable retroreflection being invariant against variations of the pointing of the beam in three dimensions. This may be combined with the first reflection surface and the second reflection surface forming part of a separate corner reflector.

The beam deflection device may further comprise a support unit for supporting the multiple reflection surfaces. The support unit may, thus, be further configured to support the first, second, third and the fourth reflection surface, wherein the support unit is configured to tilt the multiple reflection surfaces around the optical center. The support unit may be further configured to move the multiple reflection surfaces in a translational manner perpendicular to the common intersection axis/to an axis corresponding to the optical center or extending through the optical center. Hence, the beam deflection device may comprise suitable means for tilting and/or translationally moving the beam deflection device, i. e. the multiple reflection surfaces. The beam deflection device being tiltable and/or translationally movable means that the assembly of reflection surfaces is tiltable and/or translationally movable. The beam deflection device shall still be considered as tiltable and/or movable if the support unit and/or other elements of the beam deflection device remain unchanged in position when tilting and/or moving the beam deflection device with respect to the incident beam. Accordingly, the method for deflecting a beam may further comprise altering a characteristic of the reflected beam by moving the reflection surfaces in a translational manner with respect to an axis corresponding to the optical center or extending through the optical center.

The optical center may correspond to or may be based on a common intersection axis of two or more reflection surfaces of the multiple reflection surfaces or reflection planes in which the respective reflection surfaces extend, respectively. Alternatively, the optical center may correspond to or may be based on an intersection point of at least two roof reflector intersection axes of roof reflectors of the multiple reflection surfaces or an axis extending through said intersection point. This may allow maintaining the deflection angle unchanged when tilting the beam deflection device around the optical center.

A volume between the multiple reflection surfaces may have at least partially a refractive index deviating from a refractive index of a surrounding of the beam deflection device. The optical center may deviate from the common intersection axis of the two or more reflection surfaces or from the intersection point of at least two roof reflector intersection axes in such a manner, that a deviation of an optical path of the deflected beam due to optical refraction in the volume between the multiple reflection surfaces is at least partly compensated. For instance, the volume between the multiple reflection surfaces may be at least partly filled with glass and/or any other transparent material. This may enhance a mechanical stability of the beam deflection device and/or may fixate a relative position and/or orientation of the multiple reflection surfaces with respect to each other. Due to an adaptation of the optical center in view of a possible refraction within the volume of the beam deflection device, the properties of the beam deflection device regarding the independence of the geometric properties of the exiting beam from the tilt angle may be essentially maintained. The adjustment of the beam deflection device such that the dependence of the geometric properties of the exiting beam on the tilt angle is zero or limited to a predetermined maximum deviation is based on adjusting the position of the optical center of the beam deflection device with respect to the multiple reflection surfaces. The position of the optical center of the beam deflection device may be determined by an optimization method, which may comprise an iterative method for minimizing a dependence of the deflection angle of the tilt angle. Adaptation of the optical center is not necessary if differences between the volume and the surrounding are negligible.

Moreover, a beam deflection device according to the disclosure may be applied in Raman spectroscopy. For this purpose, at least one reflection surface of the multiple reflection surfaces may be provided with a spectral bandpass, shortpass or longpass filter which may be based on a volume Bragg grating. Using a beam deflection device according to the disclosure may allow isolating a desired wavelength range from the incident beam coming from a sample. Angle-tuning the spectral filter in the device, that is providing the correct incidence angle of the beam on the filter for the desired wavelength range, can be performed without necessitating a realignment of further mirrors or optical components and therefore facilitates the setup of spectral filters for Raman spectroscopy. Moreover, as the beam deflection device according to the disclosure may be suitable for spectral filtering and deflecting the beam, the alignment procedure involved when changing the spectral wavelength range to be isolated may be facilitated. In particular, a realignment of further mirrors or optical components may be obsolete.

Moreover, the beam deflection device may be tilted by a tilt angle, such that the incident beam is not coupled into the beam deflection device. This may be useful for effectively removing the beam deflection device from the beam path by simply tilting it around the optical center. This may allow coupling the beam into a different optical pathway without necessitating a realignment of a complete optical setup or without physically removing the beam deflection device.

The first spectral filter arrangement of the spectral filter device may be configured to act as a reflective spectral filter having a first reflection maximum at 650 nm. The second spectral filter arrangement of the spectral filter device may be configured to act as a reflective spectral filter having a second reflection maximum at 450 nm. Tilting the spectral filter device around the common intersection axis/the optical center may allow coupling the incident beam either into the first spectral filter arrangement or into the second spectral filter arrangement. The selection may for instance be performed by tilting the spectral filter device by a tilt angle of 180° around the common intersection axis/the optical center.

Moreover, the spectral filter device may be configured to further allow fine tuning the reflection characteristics of the first spectral filter arrangement and/or of the second spectral filter arrangement. This may be achieved by tilting the spectral filter device within a small angular range, such as for instance within a range of ±10°. Fine tuning of the tilt angle may allow varying the reflectivity, for instance around a maximum of reflectivity of the reflection surface, within a range, in which the reflectivity significantly changes with the varying tilting angle. Hence, the spectral filter device may allow tuning the reflectivity and/or the wavelength of maximum reflectivity by fine tuning the tilt angle while the beam is coupled into one of the spectral filter arrangements in addition to selecting different spectral ranges for the reflectivity by changing from one to the other spectral filter arrangement by tilting the spectral filter device by a tilt angle of about 180°.

The spectral filter device may be further configured to simultaneously block rays not propagating along a nominal optical axis. The spectral filter device may be used to spectrally filter different rays propagating along different offsets from the optical axis and/or at different propagation directions with respect to the optical axis at different spectral ranges or at different wavelengths. For this purpose, an effect may be used, according to which rays having different offsets from the optical axis and/or having different propagation directions with respect to the optical axis may effectively experience a different tilt angle and may be affected by a different reflective behavior of the spectral filter assembly.

A multispectral camera may be realized based on one or more of the above-described spectral filter devices in combination with imaging optics. For instance, the imaging optics may comprise a telescope having a second lens serving as a beam compressor. After the telescope, the beam is coupled into a spectral filter device and spectrally filtered according to the chosen settings of the spectral filter device. Another imaging lens may be used to image the beam onto a sensor array after outcoupling the beam from the spectral filter device. Tilting and/or rotating around the optical center and/or moving the spectral filter arrangement perpendicular to optical center axis allows varying the spectral filtering and, hence the wavelength and the spectral range imaged onto the sensor array. Hence, sequential images may be captured based on different settings of the spectral filter device and by this a multispectral image may be assembled based on the multiple images sequentially captured based on the different settings for the spectral filter device.

Optionally the spectral filter device may be automatedly tilted and/or rotated around the optical center, wherein the capturing process of the sensor array may be automated and synchronized to the rotational movement of the spectral filter device. This may allow automatedly capturing multiple images at different spectral filter settings and automatedly generating a multispectral image based on the captured images.

As the spectral filter device offers spectral filtering based on reflection, i. e. providing the spectrally filtered output in reflection, it allows avoiding undesired back reflections and/or stray light which conventionally occur(s) at transmission-based spectral interference filters.

A spectral filter device and/or a multispectral camera based thereon may be used in devices requiring a multispectral camera and being limited in size and/or weight. For instance, the spectral filter device and/or the multispectral camera may be used in exploration vehicles deployed in outer space, e. g. in other space objects, such as in a Mars rover. A multispectral camera according to the disclosure may allow extending the functionality of such exploration vehicles while keeping their size and/or weight small. Since the weight of a rover is very limited, conventionally not all wavelengths of interest can be investigated, since a single absorption filter must be provided for each of these wavelengths. With an adjustable spectral filter device according to the disclosure, it would be possible to investigate more wavelengths with each having a narrower spectrum. This would definitely represent an added scientific value. Conventionally occurring undesired back reflections are omitted, since the spectral filter device is not operated in transmission but in reflection.

The disclosed devices may be realized in a simple manner. Adaptation and/or retrofitting to existing optical systems are/is possible. In this way, consumer cameras such as single-lens reflex cameras or smartphone cameras could be upgraded to multispectral systems. This is possible, even though these cameras usually carry a Bayer filter (with means for processing of the RAW data). In practice, a Bayer filter may also be advantageous, because with interference filters usually other wavelengths than the design wavelength can be reflected.

The beam deflection device and/or the spectral filter device may comprise a bulk body made of a transparent material, such as glass, wherein the reflection surfaces may be arranged on or in the glass body. This may enhance a mechanical stability of the beam deflection device and/or the spectral filter device and in particular may stabilize the opening angle. However, according to other embodiments, the reflection surfaces may not be attached to a bulk body but the space between the reflection surfaces may essentially be filled with air, other liquids or may be evacuated.

The disclsoure further comprises the following items:
A beam deflection device for deflecting a beam, the beam deflection device comprising multiple reflection surfaces having a predetermined relative orientation with respect to each other, wherein the beam deflection device is configured to be tiltable around an optical center of the beam deflection device such that the predetermined relative orientation of the multiple reflection surfaces is maintained, and wherein the relative orientation of the multiple reflection surfaces is adjusted to cause a predetermined deflection angle for the deflected beam. The beam deflection device is configured such that a variation of the predetermined beam deflection angle is zero or limited to a predetermined maximum deviation when tilting the beam deflection device around the optical center within a predetermined angular range of a tilt angle. The beam deflection device is further configured such that a variation of the geometric properties of the reflected beam is zero or limited to a predetermined maximum deviation when tilting the beam deflection device around the optical center within a predetermined angular range of a tilt angle. At least one reflection surface of the multiple reflection surfaces comprises a functionality for altering a characteristic of the reflected beam depending on the tilt angle of the beam deflection device around the optical center.

The multiple refection surfaces may comprise a first reflection surface extending in a first reflection plane and a second reflection surface extending in a second reflection plane. ;
The first reflection plane and the second reflection plane may have a common intersection axis and are arranged such that an opening angle between the first reflection plane and the second reflection plane corresponds to half of the predetermined deflection angle.

The optical center may corresponds to or is based on the common intersection axis.

The multiple reflection surfaces may comprise at least one roof reflector having two reflection surfaces intersecting in a roof reflector intersection axis.

The multiple reflection surfaces may comprise two roof reflectors each having two reflection surfaces intersecting in a respective roof reflector intersection axis, wherein the roof intersection axes of the two roof reflectors intersect in an intersection point, and wherein the optical center corresponds to or is based on the intersection point.

The characteristic of the reflected beam altered by the functionality of the at least one reflection surface of the multiple reflection surfaces may comprise one or more of the following beam properties:
- a spectral range of the reflected beam;
- a central wavelength of the reflected beam;
- a diffraction pattern of the reflected beam;
- a polarization type of the reflected beam;
- a polarization direction of the reflected beam; and
- a power and/or intensity of the reflected beam.

The beam deflection device may be configured such that the functionality of the at least one reflection surface of the multiple second reflection surfaces for altering a characteristic of the reflected beam depends on a tilt angle by which the beam deflection device is tilted around the optical center.

The beam deflection device may be further configured such that the functionality of the at least one reflection surface of the multiple second reflection surfaces for altering a characteristic of the reflected beam depends on the position at which the beam intersects with the at least one reflection surface of the multiple intersection surfaces.

The functionality for altering a characteristic of the reflected beam is provided by one or more of the following functional elements comprised by the at least one reflection surface of the multiple reflection surfaces:
- an interference arrangement, preferably comprising several interference layers;
- a spectral interference filter element, preferably comprising a metal interference filter element;
- a dichroic mirror;
- a diffractive element, preferably comprising a grating arranged at the respective reflection surface and/or a holographic volume grating;
- a refractive element having a predetermined refractive index; and
- an absorption element.

The beam deflection device may further comprise a support unit for supporting the multiple reflection surfaces, wherein the support unit is configured to tilt the multiple reflection surfaces around the optical center. The support unit may be further configured to move the multiple reflection surfaces in a translational manner perpendicular to an axis corresponding to the optical center or extending through the optical center.

The optical center may correspond to or be based on a common intersection axis of two or more reflection surfaces of the multiple reflection surfaces or reflection planes in which the respective reflection surfaces extend, respectively, or may corresponds to or is based on an intersection point of at least two roof reflector intersection axes of roof reflectors of the multiple reflection surfaces or an axis extending through said intersection point.

A volume between the multiple reflection surfaces may have at least partially a refractive index deviating from a refractive index of a surrounding of the beam deflection device. The optical center may deviate from the common intersection axis of the two or more reflection surfaces or from the intersection point of at least two roof reflector intersection axes in such a manner, that a deviation of an optical path of the deflected beam due to optical refraction in the volume between the multiple reflection surfaces is at least partly compensated.

The adjustment of the beam deflection device such that the variation of the predetermined beam deflection angle is zero or limited to a predetermined maximum deviation may be based on adjusting a position of the optical center of the beam deflection device with respect to the multiple reflection surfaces.

Furthermore, a use of a beam deflection device according to the disclosure for attenuating and/or spectrally filtering a beam deflected by the beam deflection device is provided.

Moreover, a spectral filter device for spectrally filtering and deflecting a beam by a predetermined deflection angle is provided. The spectral filter device may comprise a beam deflection device according to the disclosure, wherein the spectral filter device is configured to vary the spectral filtering of the beam by tilting the beam deflection device with respect to a propagation axis of the beam.

Moreover, a multispectral camera for sequentially capturing images at different spectral ranges is provided, characterized in that the multispectral camera comprises at least one spectral filter device according to the disclosure for spectrally filtering the light to be captured as the image.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Further optional embodiments will be illustrated in the following with reference to the drawings.
Figures 1A to 1C show a beam deflection device according to various different embodiments.
Figure 2 illustrates a feature of a beam deflection device according to an embodiment.
Figure 3 depicts a beam deflection device according to yet another embodiment.
Figure 4 schematically illustrates a method for deflecting a beam by a predetermined deflection angle according to an embodiment.
Figure 5 schematically depicts a spectral filter device according to an embodiment.
Figures 6A and 6B illustrate the working principle of the spectral filter device according to the embodiment presented in Figure 5.
Figure 7 schematically depicts a multispectral camera 36 according to an embodiment.
Figures 8A to 8D schematically illustrate various optional configurations of a beam deflection device 10.
Figure 9A and 9B depict a beam deflection device in different views.
Figure 10 depicts another embodiment of a beam deflection device 10.

In the drawings the same reference signs are used for corresponding or similar features in different drawings.

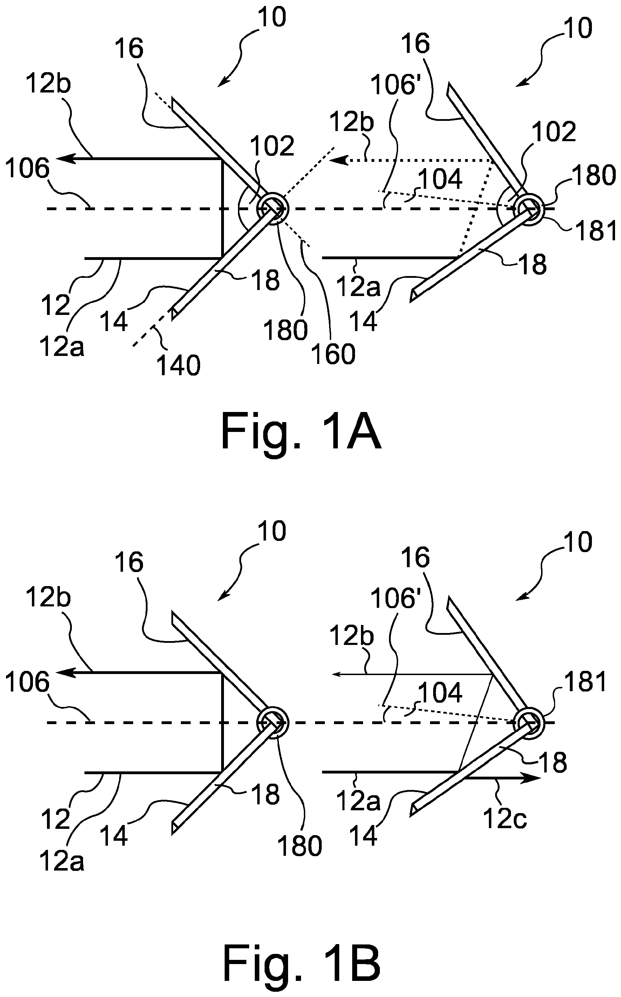

Figures 1A to 1C show a beam deflection device 10 according to various different embodiments. Each of the Figures 1A to 1C depict the beam deflection device 10 at two different tilt angles 104. General features of the beam deflection device 10 will be discussed in the following with reference to Figure 1A.

The beam deflection device 10 is adapted to deflect a beam 12 by a predetermined deflection angle. The beam deflection device 10 according to the presented embodiment comprises multiple reflection surfaces comprising a first reflection surface 14 extending in a first reflection plane 140 and a second reflection surface 16 extending in a second reflection plane 160, wherein the first reflection plane 140 and the second reflection plane 160 have a common intersection axis 180 and are arranged such that an opening angle 102 enclosed between the first reflection plane 140 and the second reflection plane 160 corresponds to half of the predetermined deflection angle. The bisecting plane 106 is presented as dashed line for a tilt angle 104 of 0°. According to the presented embodiment the opening angle 102 is 90° and the predetermined deflection angle between the propagation direction of the incident beam 12a and the reflected beam 12b is 180°. According to the presented embodiment, the common intersection axis 180 represents the optical center 181 of the beam deflection device 10.

The beam deflection device 10 is adapted to be tiltable around the common intersection axis 180 of the first reflection plane 140 and the second reflection plane 160 by a tilt angle 104. According to the presented embodiment, the tilt angle 104 is considered as the angle between the bisecting axis 106' at the tilted orientation of the beam deflection device 10 and the bisecting axis 106 at a tilt angle of 0°, which according to the presented embodiment is parallel to the propagation direction of the incident beam 12a.

According to the presented embodiment, the first reflection surface 14 comprises a functionality for altering a characteristic of the reflected beam 12b depending on the tilt angle 104. The functionality is provided by a functional element 18 arranged at the first reflection surface 14. According to the presented embodiment, the functional element 18 comprises or consists of a reflector having a reflectivity depending on the angle of incidence of the incident beam 12a on the first reflection surface 14. As indicated in Figure 1A, the reflectivity of the functional element 18 is high at a tilt angle of 0°, which corresponds in the presented embodiment to an incidence angle of 45° (shown on the left hand side), and the reflectivity is low when the tilt angle deviates from 0° and accordingly the angle of incidence deviates from 45° (shown on the right hand side). On the right-hand side of Figure 1A, the tilt angle 104 is about 10° and, hence the angle of incidence is about 55°. The beam deflection device 10 according to the embodiment presented in Figure 1A may be useful for attenuating the power of the beam 12 by reflecting only an attenuated portion of the beam 12. The non-reflected portion of the beam 12 may be absorbed by the functional element 18.

According to the presented embodiment, the first reflection surface 14 and the second reflection surface 16 both extend up to the common intersection axis 180 indicated by a circle around said common intersection axis 180. The common intersection axis 180 and, thus, the optical center 181 extend perpendicular to the drawing plane. According to other embodiments, the first reflection surface 14 and/or the second reflection surface 16 may be spaced apart from the common intersection axis 180.

Figure 1B presents another embodiment of a beam deflection device 10 being in most aspects identical or similar to the embodiment shown in Figure 1A. However, the embodiment of Figure 1B differs from the embodiment of Figure 1A in that the functional element 18 of the first reflection surface 14 is configured to transmit at least a part of the non-reflected portion 12c of the incident beam 12a through the first reflection surface 14 instead of entirely absorbing it (when the beam deflection device 10 is tilted around the common intersection axis 180 by a tilt angle 104 of about 10°). It is noted that the beam propagation path of the transmitted portion 12c is offset with respect to the beam propagation path of the incident beam 12a. This embodiment may allow measuring the power of the transmitted portion 12c of the beam 12 behind the first reflection surface 14. The reflection and transmission properties of the functional element 18 of the first reflection surface 14 depend on the angle of incidence and, hence, on the tilt angle 104. Therefore, the tilt angle 104 may be varied for adjusting the reflectivity and transmissivity of the first reflection surface 14.

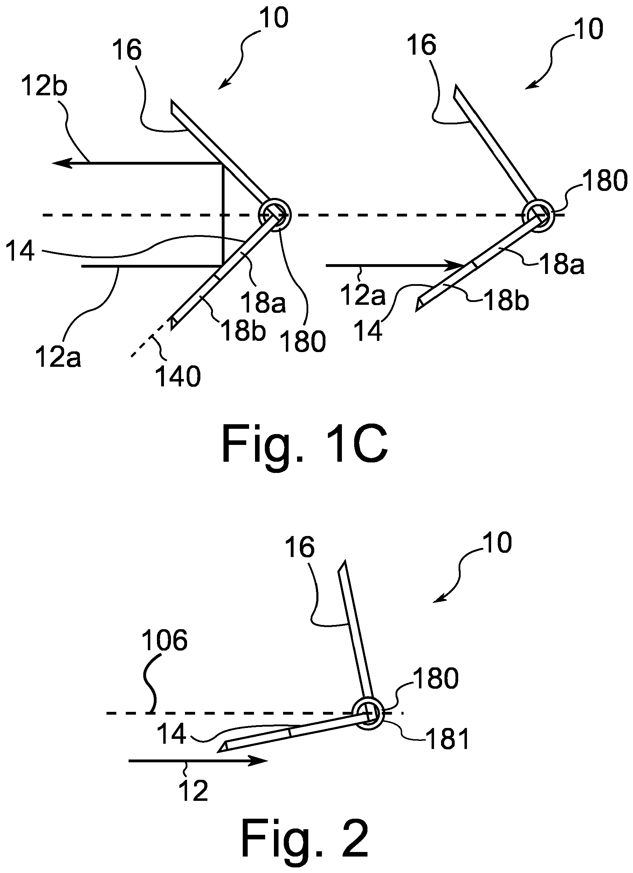

The embodiment shown in Figure 1C is similar to the embodiments presented in Figures 1A and 1B but differs in the feature that the first reflective surface 14 comprises two different functional elements 18a and 18b arranged at the first reflection surface 14. The first functional element 18a is arranged at a first section of the first reflection surface 14 and has a high reflectivity for reflecting the incident beam 12a. The reflectivity may be variant or invariant with the angle of incidence and the tilt angle 104. The second functional element 18b is arranged at a second section of the first reflection surface 14 and is an absorber configured to entirely absorb the incident beam 12a and accordingly not to reflect the incident beam 12a. Therefore, the beam deflection device 10 according to the embodiment of Figure 1C may be used to switch the beam 12 on and off by tilting the beam deflection device 10 to change the position of incidence of the beam 12 to either the reflective functional element 18a or the absorbing functional element 18b.

Figure 2 illustrates a feature of a beam deflection device 10 according to another embodiment. This embodiment allows tilting the beam deflection device 10 such that the beam 12 is not coupled into the beam deflection device 10 but propagates past the beam deflection device 10 without being disturbed by the beam deflection device 10. This allows removing the beam deflection device 10 from the propagation path of the beam 12 merely by tilting the beam deflection device 10 and without translationally moving the common intersection axis 180 of the beam deflection device 10.

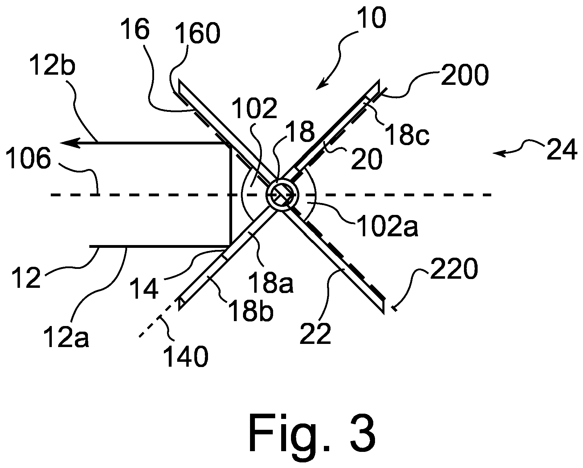

Figure 3 depicts a beam deflection device 10 according to yet another embodiment. This embodiment differs from the embodiment presented in Figure 1C by comprising a third reflection surface 20 extending in a third reflection plane 200 and a fourth reflection surface 22 extending in a fourth reflection plane 220. The third reflection surface 20 and the fourth reflection surface 22 enclose an opening angle 102a of 90°, which corresponds to the opening angle 102 enclosed between the first reflection surface 14 and the second reflection surface 16. The third reflection plane 200 may overlap with the first reflection plane 140 and/or the fourth reflection plane 220 may overlap with the second reflection plane 160, which, however, is not necessarily required.

By rotating the beam deflection device 10 by about 180° around the common intersection axis 180 (not shown), the beam deflection device 10 may be arranged such that the incident beam 12a is coupled into the opening between the third reflection surface 20 and the fourth reflection surface 22 instead of being coupled into the opening between the first reflection surface 14 and the second reflection surface 16. This allows increasing the options for altering a characteristic of the reflected beam 12b. In particular, the third reflection surface 20 and/or the fourth reflection surface 22 may comprise a functional element 18c being different from the functional elements 18a and 18b comprised by the first reflection surface 14. Hence, a different alteration of a characteristic of the beam 12 may be provided by bringing the third reflection surface 20 and the fourth reflection surface 22 in the propagation path of the beam 12.

The functional element 18c may be a spectral filter, so that the beam deflection device 10 can be utilized as a spectral filter device 24.

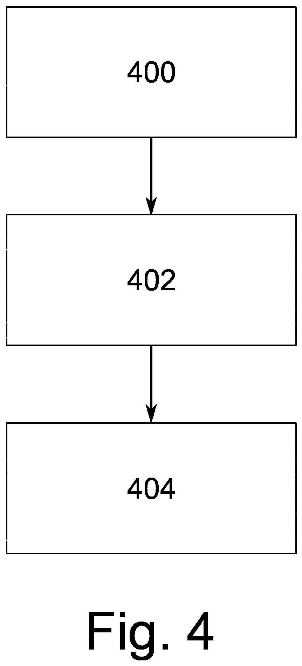

Figure 4 schematically illustrates a method for deflecting a beam 12 by a predetermined deflection angle according to an embodiment. The method may be carried out using a beam deflection device 10 as described in one of the above-presented embodiments.

In a first step 400, the method comprises coupling the beam 12 into a beam deflection device 10 having a first reflection surface 14 extending in a first reflection plane 140 and a second reflection surface 16 extending in a second reflection plane160, wherein the first reflection plane 140 and the second reflection plane 160 have a common intersection axis 180 and are arranged such that an opening angle 102 enclosed between the first reflection plane 140 and the second reflection plane 160 corresponds to half of the predetermined deflection angle.

In another step 402, the method comprises altering a characteristic of the reflected beam 12b by adjusting an angle of incidence of the beam into the beam deflection device 10 by tilting the beam deflection device 10 around the common intersection axis 180 by a tilt angle 104, wherein the deflection angle of the reflected beam 12b coupled out from the beam deflection device 10 is independent of the tilt angle 104 of the beam deflection device 10.

Moreover, in yet another method step 404 the method comprises outcoupling the beam 12 from the beam deflection device 10 at the predetermined deflection angle with respect to the beam 12 coupled into the beam deflection device10.

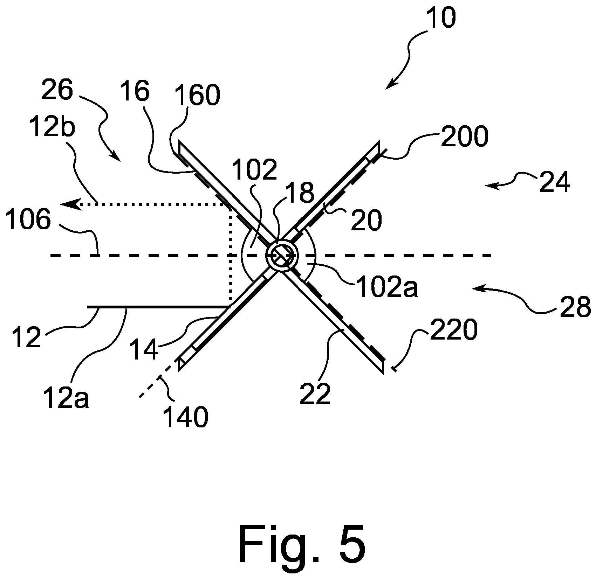

Figure 5 schematically depicts a spectral filter device 24 according to an embodiment based on a beam deflection device 10 as presented in Figure 3.

The spectral filter device 24 for spectrally filtering and deflecting a beam 12 by a predetermined deflection angle comprises a first spectral filter arrangement 26 having a first reflection surface 14 extending in a first reflection plane 140 and a second reflection surface 16 extending in a second reflection plane160, wherein the first reflection plane 140 and the second reflection plane 160 have a common intersection axis 180 and are arranged such that an opening angle 102 enclosed between the first reflection plane 140 and the second reflection plane 160 corresponds to half of the predetermined deflection angle.

The spectral filter device 24 further comprises a second spectral filter arrangement 28 having a third reflection surface 20 extending in a third reflection plane 200 and a fourth reflection surface 22 extending in a fourth reflection plane 220, wherein the third reflection plane 200 and the fourth reflection plane 220 intersect in the common intersection axis 180 of the first reflection plane 140 and the second reflection plane 160 and are arranged such that an opening angle 102a enclosed between the third reflection plane 200 and the fourth reflection plane 220 corresponds to half of the predetermined deflection angle.

The first reflection surface 14 comprises spectrally selective reflection properties such that the first spectral filter arrangement 26 is configured to isolate a first spectral range as the reflected beam 12b.

The third reflection surface 20 comprises spectrally selective reflection properties such that the second spectral filter arrangement 28 is configured to isolate a second spectral range as the reflected beam 12b, wherein the second spectral range is different from the first spectral range.

The spectral filter device 24 is configured to be tiltable around the common intersection axis 180 to couple the beam 12 either into the first spectral filter arrangement 26 or into the second spectral filter arrangement 28.

For instance, the first spectral filter arrangement 26 may be adapted to reflect a first spectral range centered at 650 nm. Whereas, for instance, the second spectral filter arrangement 28 may be adapted to reflect a second spectral range centered at 450 nm. Tilting the spectral filter device 24 by 180° around the common intersection axis 180 allows changing between spectral filtering at 650 nm and 450 nm.

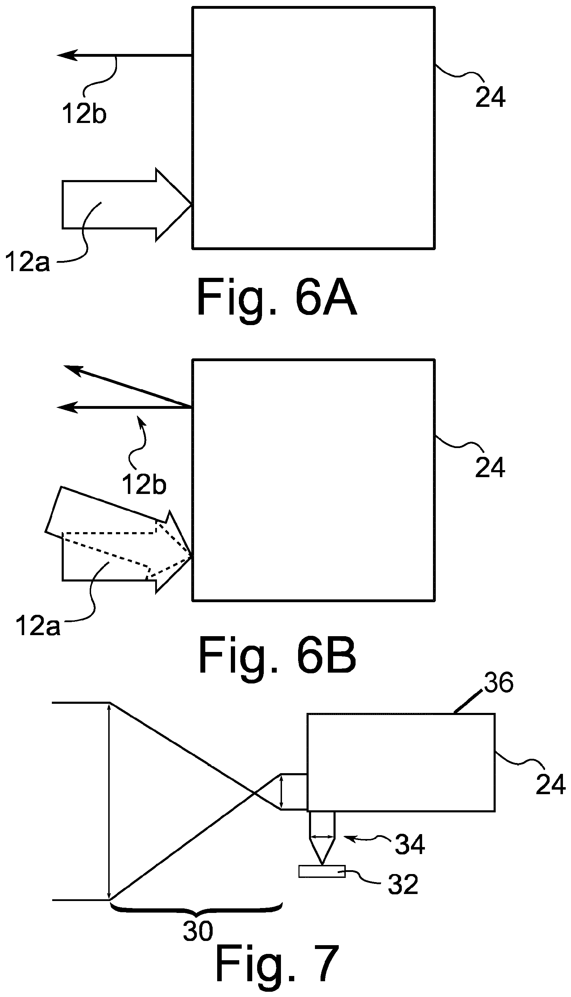

With reference to Figures 6A and 6B the function of the spectral filter device 24 according to the embodiment presented in Figure 5 is illustrated.

Figure 6A depicts a scenario in which a polychromatic collimated beam 12a is coupled into the spectral filter device 24. When setting a tilt angle 104 of 0° the incident beam 12a enters the first spectral filter arrangement 26 having a maximum reflectivity at 650 nm. Accordingly, the incident beam 12a is spectrally filtered and the reflected beam 12b having a narrow spectrum around 650 nm is coupled out. When tilting the spectral filter device 24 by 180° around the common intersection axis 180 (not shown), the incident beam 12a enters the second spectral filter arrangement 28 having a maximum reflectivity at 450 nm. This results in a reflected beam 12b being coupled out with a small spectral range around 450 nm.

Figure 6B illustrates a scenario in which the incident beam 12a comprises a range of different angles of incidence. As the reflectivity of the first and second spectral filter arrangement 26, 28 is dependent on the angle of incidence, different parts of the incident beam 12a experience different reflectivities resulting in a broader spectrum centered around 650 nm or 450 nm of the reflected beam 12b, respectively. This effect may also be used when coupling a collimated beam 12 of essentially only one angle of incidence into the spectral filtering device 24. In this case, tilting the spectral filtering device 24 around the common intersection axis 180 by small angles, such as by ±10° allows spectrally tuning the center wavelength of the reflected beam 12b coupled out.

Figure 7 schematically depicts a multispectral camera 36 according to an embodiment, comprising a spectral filter device 24 as presented in Figure 5, a telescope 30, a sensor array 32 and an imaging lens 34 for imaging the deflected and spectrally filtered beam 12b onto the sensor array 32.

The telescope 30 may be pointed at a distant object (to be imaged by said multispectral camera) and may be used for reducing the transversal beam profile. The beam 12 is spectrally filtered by the spectral filter device 24. The imaging lens 34 may be used to image the reflected beam 12b coupled out from the spectral filter device 24 onto the sensor array 32.

Objects located off the optical axis of the telescope 30 are spectrally filtered by a different filter function than the object on the optical axis of the telescope 30 (spatio-spectral scanning). The spectral filtering device 24 may comprise multiple spectral filter arrangements 26, 28 which may be switched to sequentially capture images spectrally filtered at different wavelengths. Based on the captured images, a multispectral image may be assembled. To achieve a larger information content, the spectral filter device 24 may be tilted and/or moved with a fine angular resolution for each spectral filter arrangement 26, 28 to slightly vary the maxima or edges of the spectral filtering. Alternatively, the common intersection axis 180 of the spectral filter device 24 may be moved. The exposure time of the sensor array 32 may be synchronized with the movement and/or the tilting of the spectral filtering device 24. A continuous movement of the spectral filtering device allows imaging with a spectral function which is averaged over the angular range of the filter corresponding to the exposure time.

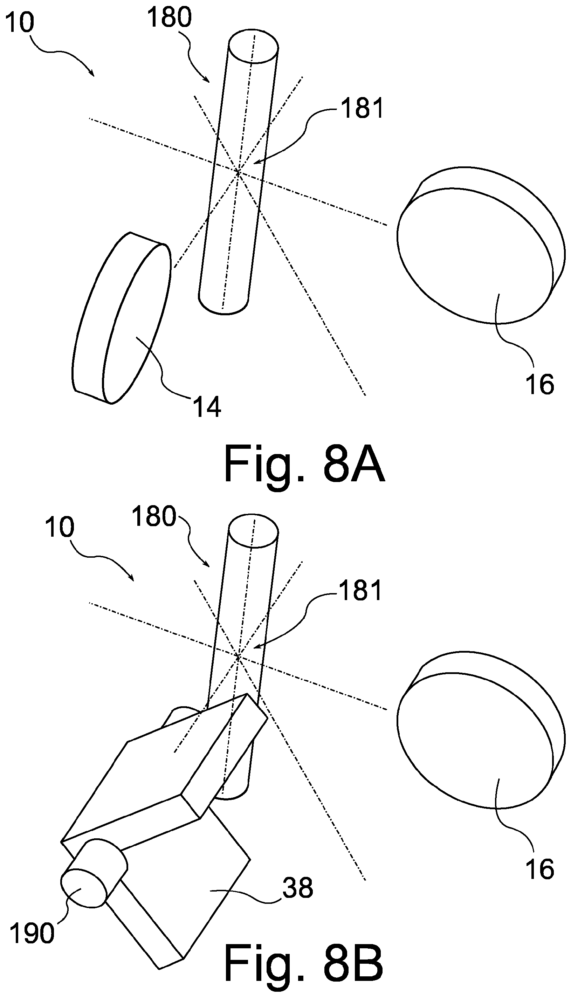

Figures 8A to 8D schematically illustrate various optional configurations of a beam deflection device 10.

Figure 8A depicts a rather simple form of a beam deflection device 10, wherein the multiple reflection surfaces comprise a first reflection surface 14 extending in a first reflection plane 140 (not shown) and a second reflection surface 16 extending in a second reflection plane 160 (not shown). The first reflection plane 140 and the second reflection plane 160 intersect in a common intersection axis 180 which may form the optical center 181.

An advantage of this optional configuration according to Figure 8A is the invariance of the geometrical properties of the deflected rays, i. e. an independence of the optical path and path length from the tilt angle of the beam deflection device 10 around the common intersection axis 180. This independence may be checked by means of ray tracing.

Due to the location of the common intersection axis 180 of the reflection planes 140, 160, the geometric properties of the reflected rays become invariant to the tilt angle of the beam deflection device 10.

In contrast to rotationally symmetric optical elements such as lenses, fibers or mirrors, the beam deflection device has no "natural" optical axis. Besides having no optical axis as such there is also no "natural" zero angle position. However, an optical axis of the beam deflection device 10 may be useful for constructive purposes. Definition of a nominal optical axis and zero angle position depends on the intended application. To define an optical axis for the beam deflection device 10, the optical axis of a previous optic element may be extended. The beam deflection device 10 may be aligned to an optical axis of a previous optic element in such a way that the extended and once reflected optical axis perpendicularly intersects the bisector of the dihedral. This angular position may then be defined as a zero angle position of the beam deflection device 10. In this angular position, the angles of incidence of an incoming beam on the first and second reflection surface 14, 16 are also the same. Furthermore, it can be specified that the optical axis of the previous optic element intersects the geometric center of the first reflection surface 14.

Suitable reflection surfaces may comprise interference coatings, metal interference filters, dichroic mirrors, diffractive elements, gratings, volume gratings, holographic elements, structured surfaces with sub-wavelength structures, bulk materials with a complex refractive index and/or absorption elements.

The reflection property may be uniformly distributed over the reflection surfaces 14, 16 or may vary. The reflection property may be different for the different reflection surfaces 14, 16. The reflection property may be dependent on a polarization of the incident beam 12a.

The reflection property may be dependent on a wavelength of the incident beam 12a. The reflection surface may alter a polarization property of the incident beam 12a. This may depend strongly on the coating of a reflection surface 14, 16.

The rotation axis of the beam deflection device 10 may be realized with a wide variety of bearings, such as plain bearings, rolling bearings, solid state joints, fluid bearings, air bearings, oil bearings, and/or magnetic bearings.

Figure 8B depicts another embodiment of a beam deflection device 10, which in many aspects is similar to the embodiment of Figure 8A, but which differs in the first reflection surface 14 being replaced by a 90° roof reflector 38. A roof reflector 38 is a reflector in the shape of a roof. The roof reflector 38 comprises two reflection surfaces enclosing an angle of 90° with respect to each other intersecting in a roof reflector intersection axis 190.

The roof reflector intersection axis 190 is orthogonal to the intersection axis 180 and lies in the plane of the first reflection surface 14 to be replaced. The invariance of the geometrical properties of the reflected rays with respect to a rotation around the optical center 181 is preserved.

The roof reflector 38 itself may be regarded as an example of a beam deflection device 10 according to the embodiment of Figure 8A. A rotation of the roof reflector 38 around the roof reflector intersection axis 190 is possible while mainting the rotational invariance of the deflection device 10. This configuration has two rotational degrees of freedom. An incident beam 12a is reflected three times, once per surface.

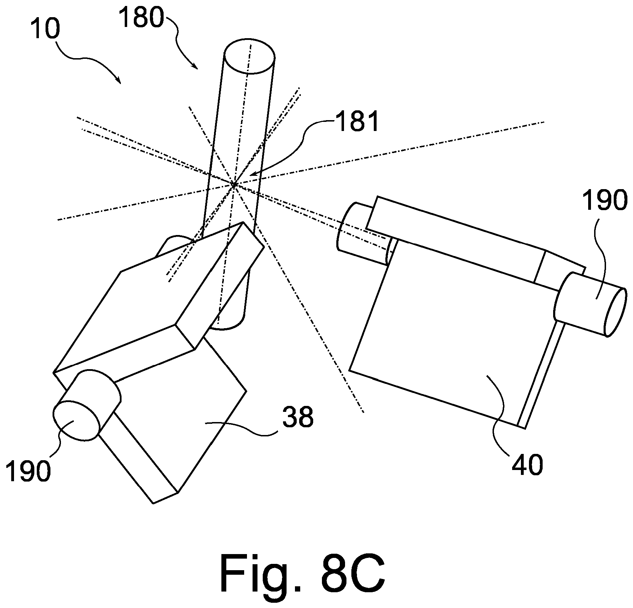

Figure 8C depicts a further optional configuration of a beam deflection device 10, wherein the multiple reflection surfaces comprise two roof reflectors 38, 40. This embodiment is similar to the embodiment shown in Figure 8B but differs in the second reflection surface 16 being replaced by a roof reflector 40. The roof reflector intersection axis 190 of the roof reflector 40 is orthogonal to the intersection axis 180 and lies in the plane of the second reflection surface 16 to be replaced. The invariance of the geometrical properties of the reflected rays with respect to a tilting around the common intersection axis 180 is preserved. The second roof reflector 40 itself may be regarded as an example of a beam deflection device 10 according to the embodiment shown in Figure 8A. A rotation of the roof reflector 40 around its roof reflector intersection axis 190 is possible.

This configuration comprises four reflection surfaces and offers three rotational degrees of freedom. An incident beam is reflected four times, once per surface.

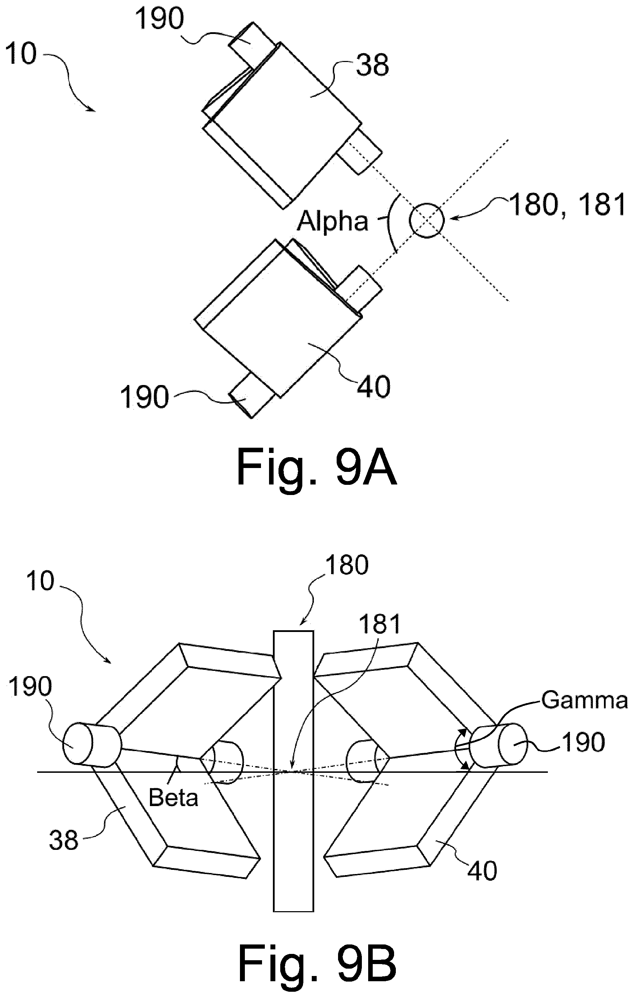

The embodiment shown in Figure 8C having two 90° roof reflectors 38, 40 (four surfaces, three rotation axes) may be modified further. Both roof reflectors 38, 40 are arranged such that their respective roof reflector intersection axes 190 intersect at an angle Alpha of 90° in a plane orthogonal to 180, as shown in Figure 9A. Moreover, the roof reflectors 38, 40 are deflected out of a plane orthogonal to the common intersection axis 180 by an angle Beta, as shown in Figure 9B. In this case, the dihedral angles Gamma of the roof reflectors 38, 40 have to be adjusted to maintain the invariance of the geometric properties of the reflected rays with respect to a rotation around the common intersection axis 180.

In the following table, Alpha is angle enclosed between two planes which intersect in the intersection axis 180. Each roof reflector axis 190 is situated in its respective planes. Beta is the angle from which the roof reflector intersection axis 190 deviates from an orthogonal orientation with the intersection axis 180. Both roof reflector intersection axis 190 intersect in one point in the intersection axis 180. Gamma is the dihedral angle of the roof reflectors 38, 40. When Alpha, Beta and Gamma are provided, the angle Delta can be calculated, which is the angle between both roof reflector intersection axis 190.

| All values for angles are in degrees and truncated | | | | | |
|---|---|---|---|---|---|
| | | | | Nominal | Nominal |
| Alpha | Beta | Gamma | Delta | Incidence | Deflection |
| 90 | 0 | 90,00000 | 90,00000 | 60,00000 | 180 |
| 90 | 1 | 89,00015 | 89,98255 | 59,70712 | 180 |
| 90 | 2 | 88,00122 | 89,93022 | 59,40579 | 180 |
| 90 | 3 | 87,00410 | 89,84306 | 59,09597 | 180 |
| 90 | 4 | 86,00971 | 89,72120 | 58,77763 | 180 |
| 90 | 5 | 85,01893 | 89,56477 | 58,45078 | 180 |
| | | | | | |

| | | | | Nominal | Nominal |
|---|---|---|---|---|---|
| Alpha | Beta | Gamma | Delta | incidence | Deflection |
| 95 | 0 | 90,00000 | 95,00000 | 61,46377 | 190 |
| 95 | 1 | 88,90888 | 94,98096 | 61,16239 | 190 |
| 95 | 2 | 87,81888 | 94,92385 | 60,85162 | 190 |
| 95 | 3 | 86,73112 | 94,82876 | 60,53143 | 190 |
| 95 | 4 | 85,64671 | 94,69581 | 60,20176 | 190 |
| 95 | 5 | 84,56673 | 94,52520 | 59,86260 | 190 |
| | | | | | |

| | | | | Nominal | Nominal |
|---|---|---|---|---|---|
| Alpha | Beta | Gamma | Delta | Incidence | Deflection |
| 45 | 0 | 90,00000 | 45,00000 | 49,21053 | 90 |
| 45 | 1 | 89,58581 | 44,99277 | 49,03062 | 90 |
| 45 | 2 | 89,17180 | 44,97109 | 48,84832 | 90 |
| 45 | 3 | 88,75812 | 44,93496 | 48,66366 | 90 |
| 45 | 4 | 88,34495 | 44,88440 | 48,47667 | 90 |
| 45 | 5 | 87,93246 | 44,81944 | 48,28739 | 90 |
| 45 | 6 | 87,52081 | 44,74010 | 48,09585 | 90 |
| 45 | 7 | 87,11017 | 44,64643 | 47,90210 | 90 |
| 45 | 8 | 86,70070 | 44,53845 | 47,70619 | 90 |
| 45 | 9 | 86,29257 | 44,41624 | 47,50814 | 90 |
| 45 | 10 | 85,88595 | 44,27983 | 47,30803 | 90 |

As can be seen from the values presented in the table above, the invariance of the beam deflection angle for increasing values of Beta may be achieved by selecting an appropriate angle Gamma. Delta is provided here solely for the purpose of providing a detailed description. Provided is also the nominal deflection angle. Devices with the same angle Alpha and different angles Beta and Gamma achieve geometrically an equal beam deflection and may be substituted for each other in an optical setup freely. This may be advantageous to an optical designer who may want to achieve certain incidence angles while maintaining a desired deflection angle. Provided are also the nominal incidence angles i.e. the incidence angle on all surfaces for a ray orthogonal to 180 when the device is adjusted to a neutral position relative to the ray. The presented values were obtained by an optimization procedure.

The optimization procedure may use ray tracing to determine the angle Gamma at given values for the angles Alpha and Beta. For this purpose, the passage of a ray through the beam deflection device 10 may be simulated twice in a ray tracing environment - once in the neutral angular position of the beam deflection device 10, and once in a slightly different (arbitrarily chosen, e. g. +5°) angular position of the beam deflection device 10 relative to a neutral position. The geometrical properties of said two rays after passing through the beam deflection device 10 may differ if a value for the angle Gamma is incorrectly chosen. From the difference of the geometrical properties a (weighted) error value (scalar) may be calculated. The angle Gamma can be optimized manually or on behalf of an algorithm so that the error value approaches zero. It may be sufficient to find an angle Gamma for one ray at two angular positions of the beam deflection device 10. If the beam deflection device 10 is optimized for one ray at two angular positions, it may be optimized for all rays at all valid angular positions. The optimization procedure may be performed for any desired angle and is not limited to the resultant angles in the table.

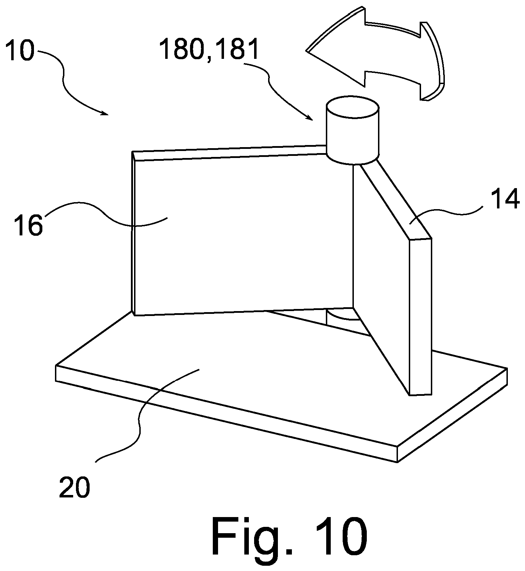

Figure 10 depicts another embodiment of a beam deflection device 10, wherein the multiple reflection surfaces comprise a first, a second and a third reflection surface 14, 20, 16. The second reflection surface 20 is arranged perpendicular to the optical center 181, which is the common intersection axis 180 of the first and third reflection surfaces 14, 16. In this case, an incident beam is reflected three times at the deflection device 10.

Several methods may be used to check the beam deflection device 10 for correct operation. One way may comprise propagating a laser beam through the beam deflection device 10 and catch it on a screen. The position of the laser beam on the screen may be marked. When a rotation of the beam deflection device 10 around the optical center 181 is performed, the position of the laser beam on the screen does not shift in case of proper alignment of the beam deflection device 10. If there is a deviation of the position of the laser beam on the screen, an iterative readjustment of the positions and/or orientations of the multiple reflection surfaces relative to the optical center 181 can minimize the positional deviation of the laser beam on the screen at different angular positions of the multiple reflection surfaces.

Alternatively or additionally, a camera may be used to capture an image of a grid/calibration pattern through the beam deflection device 10. The image of the grid or calibration pattern must not change during rotation of a properly aligned beam deflection device 10.

Alternatively or additionally, the beam deflection device 10 may be installed in an arm of an interferometer and deviations of the reflection surfaces from their ideal position and/or orientation may be inferred from a change in the interference pattern.

The beam deflection devices 10 according to the disclosure provide the advantage that the geometric properties of beams deflected by the beam deflection devices 10 remain unchanged. Optionally there is no adjustment of subsequent beam-guiding components or optical elements necessary, as the propagation direction is not affected when the beam deflection device is adjusted. Optionally no dispersion occurs. Optionally no aberrations occur. Optionally no focus shifts occur.

The large variety of possible reflection surfaces, reflection angles and possible rotation axes significantly increases the freedom in design for the optical design, especially since several filters can be mounted on one axis and activated or deactivated by tilting the beam deflection device. The present invention can be implemented inexpensively using common optical components. The beam deflection device 10 according to the disclosure may work for all physical phenomena that can be described as rays and across the electromagnetic spectrum.

### List of reference signs

- 10: beam deflection device
- 12: beam
- 12a: incident beam
- 12b: reflected beam
- 14: first reflection surface
- 16: second reflection surface
- 18, 18a, 18b: functional element
- 20: third reflection surface
- 22: fourth reflection surface
- 24: spectral filter device
- 26: first spectral filter arrangement
- 28: second spectral filter arrangement
- 30: telescope
- 32: sensor array
- 34: imaging lens
- 36: multispectral camera
- 38: roof reflector

- 102: opening angle
- 102a: opening angle
- 104: tilt angle
- 106: bisecting axis at a tilt angle of 0°
- 106': bisecting axis at a tilt angle different from 0°

- 140: first reflection plane
- 160: second reflection plane
- 180: common intersection axis
- 181: optical center
- 190: roof reflector intersection axis
- 200: third reflection plane
- 220: fourth reflection plane

- 400 - 404: method steps

## Claims

1. Beam deflection device (10) for deflecting a beam (12), the beam deflection device (10) comprising:
- multiple reflection surfaces (14, 16) having a predetermined relative orientation with respect to each other, wherein the beam deflection device (10) is configured to be tiltable around an optical center (181) of the beam deflection device (10) such that the predetermined relative orientation of the multiple reflection surfaces (14, 16) is maintained, and wherein the relative orientation of the multiple reflection surfaces (14, 16) is adjusted to cause a predetermined deflection angle for the deflected beam;
**wherein**
- the beam deflection device (10) is configured such that a variation of the predetermined beam deflection angle is zero or limited to a predetermined maximum deviation when tilting the beam deflection device (10) around the optical center (181) within a predetermined angular range of a tilt angle (102); and
- the beam deflection device (10) is configured such that a variation of the geometric properties of the reflected beam (12b) is zero or limited to a predetermined maximum deviation when tilting the beam deflection device (10) around the optical center (181) within a predetermined angular range of a tilt angle (102); and
- at least one reflection surface (14, 16) of the multiple reflection surfaces (14, 16) comprises a functionality for altering a characteristic of the reflected beam (12b) depending on the tilt angle (102) of the beam deflection device (10) around the optical center (181),
wherein the functionality for altering a characteristic of the reflected beam (12b) is provided by one or more of the following functional elements (18) comprised by the at least one reflection surface (14) of the multiple reflection surfaces (14, 16):
- an interference arrangement, preferably comprising several interference layers;
- a spectral interference filter element, preferably comprising a metal interference filter element;
- a dichroic mirror;
- a diffractive element, preferably comprising a grating arranged at the respective reflection surface and/or a holographic volume grating;
- a refractive element having a predetermined refractive index; and
- an absorption element.

2. Beam deflection device (10) according to claim 1, wherein:
- the multiple refection surfaces (14, 16) comprise a first reflection surface (14) extending in a first reflection plane (140) and a second reflection surface (16) extending in a second reflection plane (160);
- the first reflection plane (140) and the second reflection plane (160) have a common intersection axis (180) and are arranged such that an opening angle (102) between the first reflection plane (140) and the second reflection plane (160) corresponds to half of the predetermined deflection angle; and
- the optical center (181) corresponds to or is based on the common intersection axis (180).

3. Beam deflection device (10) according to claim 1 or 2, wherein the multiple reflection surfaces (14, 16) comprise at least one roof reflector (38, 40) having two reflection surfaces intersecting in a roof reflector intersection axis (190).

4. Beam deflection device (10) according to claim 1, wherein the multiple reflection surfaces comprise two roof reflectors (38, 40) each having two reflection surfaces intersecting in a respective roof reflector intersection axis (190), wherein the roof intersection axes (190) of the two roof reflectors (38, 40) intersect in an intersection point, and wherein the optical center (181) corresponds to or is based on the intersection point.

5. Beam deflection device (10) according to claim 1, wherein the characteristic of the reflected beam (12b) altered by the functionality of the at least one reflection surface of the multiple reflection surfaces (14, 16) comprises one or more of the following beam properties:
- a spectral range of the reflected beam (12b);
- a central wavelength of the reflected beam (12b);
- a diffraction pattern of the reflected beam (12b);
- a polarization type of the reflected beam (12b);
- a polarization direction of the reflected beam (12b); and
- a power and/or intensity of the reflected beam (12b).

6. Beam deflection device (10) according to any one of the preceding claims, wherein the beam deflection device (10) is configured such that the functionality of the at least one reflection surface of the multiple second reflection surfaces (14, 16) for altering a characteristic of the reflected beam (12b) depends on a tilt angle (102) by which the beam deflection device (10) is tilted around the optical center (181).

7. Beam deflection device (10) according to any one of the preceding claims, wherein the beam deflection device (10) is further configured such that the functionality of the at least one reflection surface of the multiple second reflection surfaces (14, 16) for altering a characteristic of the reflected beam (180) depends on the position at which the beam (12) intersects with the at least one reflection surface of the multiple intersection surfaces (14, 16).

8. Beam deflection device (10) according to any one of the preceding claims, further comprising a support unit for supporting the multiple reflection surfaces (14, 16), wherein the support unit is configured to tilt the multiple reflection surfaces (14, 16) around the optical center (181), and
wherein the support unit is preferably further configured to move the multiple reflection surfaces (14, 16, 20, 22) in a translational manner perpendicular to an axis corresponding to the optical center (181) or extending through the optical center (181).

9. Beam deflection device (10) according to any one of the preceding claims, wherein the optical center:
- corresponds to or is based on a common intersection axis (180) of two or more reflection surfaces of the multiple reflection surfaces (14, 16) or reflection planes (140, 160) in which the respective reflection surfaces (14, 16) extend, respectively; or
- corresponds to or is based on an intersection point of at least two roof reflector intersection axes (190) of roof reflectors (38, 40) of the multiple reflection surfaces (14, 16) or an axis extending through said intersection point.

10. Beam deflection device (10) according to claim 9, wherein a volume between the multiple reflection surfaces has at least partially a refractive index deviating from a refractive index of a surrounding of the beam deflection device (10), and
wherein the optical center deviates from the common intersection axis (180) of the two or more reflection surfaces (14, 16) or from the intersection point of at least two roof reflector intersection axes (190) in such a manner, that a deviation of an optical path of the deflected beam due to optical refraction in the volume between the multiple reflection surfaces (14, 16) is at least partly compensated.

11. Beam deflection device (10) according to claim 9 or 10, wherein the adjustment of the beam deflection device (10) such that the variation of the predetermined beam deflection angle is zero or limited to a predetermined maximum deviation is based on adjusting a position of the optical center of the beam deflection device (10) with respect to the multiple reflection surfaces (14, 16).

12. Use of a beam deflection device (10) according to any one of the preceding claims for attenuating and/or spectrally filtering a beam (12) deflected by the beam deflection device (10).

13. Spectral filter device (24) for spectrally filtering and deflecting a beam by a predetermined deflection angle, the spectral filter device (24) comprising a beam deflection device (10) according to any one of the claims 1 to 11, wherein the functionality for altering a characteristic of the reflected beam (12b) comprises spectrally filtering the reflected beam (12b), and wherein the spectral filter device (24) is configured to vary the spectral filtering of the beam by tilting the beam deflection device with respect to a propagation axis of the beam.

14. Multispectral camera (36) for sequentially capturing images at different spectral ranges, **characterized in that** the multispectral camera (36) comprises at least one spectral filter device (24) according to claim 13 for spectrally filtering the light to be captured as the image.

## Patentansprüche

1. Strahlablenkvorrichtung (10) zum Ablenken eines Strahls (12), wobei die Strahlablenkvorrichtung (10) umfasst:
- mehrere Reflexionsflächen (14, 16) mit einer vorbestimmten relativen Ausrichtung zueinander, wobei die Strahlablenkvorrichtung (10) so ausgebildet ist, dass sie um einen optischen Mittelpunkt (181) der Strahlablenkvorrichtung (10) neigbar ist, sodass die vorbestimmte relative Ausrichtung der mehreren Reflexionsflächen (14, 16) beibehalten wird, und wobei die relative Ausrichtung der mehreren Reflexionsflächen (14, 16) so eingestellt wird, dass ein vorbestimmter Ablenkwinkel für den abgelenkten Strahl bewirkt wird;
**dadurch gekennzeichnet, dass**
- die Strahlablenkvorrichtung (10) so ausgebildet ist, dass eine Abweichung des vorgegebenen Strahlablenkwinkels null ist oder auf eine vorgegebene maximale Abweichung begrenzt ist, wenn die Strahlablenkvorrichtung (10) um den optischen Mittelpunkt (181) innerhalb eines vorgegebenen Winkelbereichs eines Neigungswinkels (102) geneigt wird; und
- die Strahlablenkvorrichtung (10) so konfiguriert ist, dass eine Abweichung der geometrischen Eigenschaften des reflektierten Strahls (12b) null ist oder auf eine vorbestimmte maximale Abweichung begrenzt ist, wenn die Strahlablenkvorrichtung (10) um den optischen Mittelpunkt (181) innerhalb eines vorbestimmten Winkelbereichs eines Neigungswinkels (102) geneigt wird; und
- mindestens eine Reflexionsfläche (14, 16) der mehreren Reflexionsflächen (14, 16) eine Funktionalität zum Verändern einer Eigenschaft des reflektierten Strahls (12b) in Abhängigkeit vom Neigungswinkel (102) der Strahlablenkvorrichtung (10) um den optischen Mittelpunkt (181) umfasst,
wobei die Funktionalität zur Veränderung einer Eigenschaft des reflektierten Strahls (12b) durch eines oder mehrere der folgenden Funktionselemente (18) bereitgestellt wird, die von der mindestens einen Reflexionsfläche (14) der mehreren Reflexionsflächen (14, 16) umfasst werden:
- eine Interferenzanordnung, vorzugsweise bestehend aus mehreren Interferenzschichten;
- ein spektrales Interferenzfilterelement, vorzugsweise bestehend aus einem metallischen Interferenzfilterelement;
- einen dichroitischen Spiegel;
- ein diffraktives Element, das vorzugsweise ein an der jeweiligen Reflexionsfläche angeordnetes Gitter und/oder ein holografisches Volumengitter umfasst;
- einem Brechungselement mit einem vorgegebenen Brechungsindex; und
- ein Absorptionselement.

2. Strahlablenkvorrichtung (10) nach Anspruch 1, wobei:
- die mehreren Reflexionsflächen (14, 16) eine erste Reflexionsfläche (14), die sich in einer ersten Reflexionsebene (140) erstreckt, und eine zweite Reflexionsfläche (16), die sich in einer zweiten Reflexionsebene (160) erstreckt, umfassen;
- die erste Reflexionsebene (140) und die zweite Reflexionsebene (160) eine gemeinsame Schnittachse (180) aufweisen und so angeordnet sind, dass ein Öffnungswinkel (102) zwischen der ersten Reflexionsebene (140) und der zweiten Reflexionsebene (160) der Hälfte des vorgegebenen Ablenkwinkels entspricht; und
- der optische Mittelpunkt (181) der gemeinsamen Schnittachse (180) entspricht oder auf dieser basiert.

3. Strahlablenkvorrichtung (10) nach Anspruch 1 oder 2, wobei die Mehrfachreflexionsflächen (14, 16) mindestens einen Dachreflektor (38, 40) umfassen, der zwei Reflexionsflächen aufweist, die sich in einer Dachreflektor-Schnittachse (190) schneiden.

4. Strahlablenkvorrichtung (10) nach Anspruch 1, wobei die Mehrfachreflexionsflächen zwei Dachreflektoren (38, 40) umfassen, die jeweils zwei Reflexionsflächen aufweisen, die sich in einer jeweiligen Dachreflektor-Schnittachse (190) schneiden, wobei sich die Dachreflektor-Schnittachsen (190) der beiden Dachreflektoren (38, 40) in einem Schnittpunkt schneiden und wobei der optische Mittelpunkt (181) dem Schnittpunkt entspricht oder auf diesem basiert.

5. Strahlablenkungsvorrichtung (10) nach Anspruch 1, wobei die durch die Funktionalität der mindestens einen Reflexions sfläche der Mehrfachreflexionsflächen (14, 16) veränderte Charakteristik des reflektierten Strahls (12b) eine oder mehrere der folgenden Strahleigenschaften umfasst:
- einen Spektralbereich des reflektierten Strahls (12b);
- eine Zentralwellenlänge des reflektierten Strahls (12b);
- ein Beugungsmuster des reflektierten Strahls (12b);
- eine Polarisationsart des reflektierten Strahls (12b);
- eine Polarisationsrichtung des reflektierten Strahls (12b); und
- eine Leistung und/oder Intensität des reflektierten Strahls (12b).

6. Strahlablenkvorrichtung (10) nach einem der vorstehenden Ansprüche, wobei die Strahlablenkvorrichtung (10) derart konfiguriert ist, dass die Funktionalität der mindestens einen der mehreren zweiten Reflexionsflächen (14, 16) zur Veränderung einer Eigenschaft des reflektierten Strahls (12b) von einem Neigungswinkel (102) abhängt, um den die Strahlablenkvorrichtung (10) um den optischen Mittelpunkt (181) geneigt ist.

7. Strahlablenkvorrichtung (10) nach einem der vorstehenden Ansprüche, wobei die Strahlablenkvorrichtung (10) ferner so ausgebildet ist, dass die Funktionsweise der mindestens einen Reflexionsfläche der mehreren zweiten Reflexionsflächen (14, 16) zur Veränderung einer Eigenschaft des reflektierten Strahls (180) von der Position abhängt, an der der Strahl (12) die mindestens eine Reflexionsfläche der mehreren Schnittflächen (14, 16) schneidet.

8. Strahlablenkvorrichtung (10) nach einem der vorstehenden Ansprüche, die ferner eine Halteeinheit zum Halten der mehreren Reflexionsflächen (14, 16) umfasst, wobei die Halteeinheit so ausgebildet ist, dass sie die mehreren Reflexionsflächen (14, 16) um den optischen Mittelpunkt (181) neigt, und
wobei die Halteeinheit vorzugsweise ferner dazu ausgelegt ist, die mehreren Reflexionsflächen (14, 16, 20, 22) translatorisch senkrecht zu einer Achse zu verschieben, die dem optischen Zentrum (181) entspricht oder durch das optische Zentrum (181) verläuft.

9. Strahlablenkungsvorrichtung (10) nach einem der vorstehenden Ansprüche, wobei der optische Mittelpunkt:
- einer gemeinsamen Schnittachse (180) von zwei oder mehr Reflexionsflächen der mehreren Reflexionsflächen (14, 16) oder Reflexionsebenen (140, 160), in denen sich die jeweiligen Reflexionsflächen (14, 16) erstrecken, entspricht oder auf dieser basiert; oder
- einem Schnittpunkt von mindestens zwei Dachreflektor-Schnittachsen (190) von Dachreflektoren (38, 40) der Mehrfachreflexionsflächen (14, 16) oder einer durch diesen Schnittpunkt verlaufenden Achse entspricht oder auf dieser basiert.

10. Strahlablenkvorrichtung (10) nach Anspruch 9, wobei ein Volumen zwischen den mehreren Reflexionsflächen zumindest teilweise einen Brechungsindex aufweist, der von einem Brechungsindex der Umgebung der Strahlablenkvorrichtung (10) abweicht, und
wobei der optische Mittelpunkt von der gemeinsamen Schnittachse (180) der zwei oder mehr Reflexionsflächen (14, 16) oder vom Schnittpunkt mindestens zweier Dachreflektor-Schnittachsen (190) derart abweicht, dass eine Abweichung eines Strahlengangs des abgelenkten Strahls aufgrund optischer Brechung in dem Volumen zwischen den mehreren Reflexionsflächen (14, 16) zumindest teilweise kompensiert wird.

11. Strahlablenkvorrichtung (10) nach Anspruch 9 oder 10, wobei die Einstellung der Strahlablenkvorrichtung (10) derart, dass die Abweichung des vorgegebenen Strahlablenkungswinkels null ist oder auf eine vorgegebene maximale Abweichung begrenzt ist, auf der Einstellung einer Position des optischen Zentrums der Strahlablenkvorrichtung (10) in Bezug auf die mehreren Reflexionsflächen (14, 16) beruht.

12. Verwendung einer Strahlablenkvorrichtung (10) nach einem der vorstehenden Ansprüche zum Dämpfen und/oder spektralen Filtern eines von der Strahlablenkvorrichtung (10) abgelenkten Strahls (12).

13. Spektralfiltervorrichtung (24) zum spektralen Filtern und Ablenken eines Strahls um einen vorgegebenen Ablenkwinkel, wobei die Spektralfiltervorrichtung (24) eine Strahlablenkvorrichtung (10) gemäß einem der Ansprüche 1 bis 11 umfasst, wobei die Funktionalität zum Verändern einer Eigenschaft des reflektierten Strahls (12b) das spektrale Filtern des reflektierten Strahls (12b) umfasst, und , wobei die Spektralfiltervorrichtung (24) so konfiguriert ist, dass sie die spektrale Filterung des Strahls durch Neigen der Strahlablenkvorrichtung relativ zu einer Ausbreitungsachse des Strahls variiert.

14. Multispektralkamera (36) zum sequenziellen Aufnehmen von Bildern in verschiedenen Spektralbereichen, **dadurch gekennzeichnet, dass** die Multispektralkamera (36) mindestens eine Spektralfiltervorrichtung (24) gemäß Anspruch 13 zum spektralen Filtern des als Bild aufzunehmenden Lichts umfasst.

## Revendications

1. Dispositif de déviation de faisceau (10) destiné à dévier un faisceau (12), le dispositif de déviation de faisceau (10) comprenant :
- de multiples surfaces de réflexion (14, 16) présentant une orientation relative prédéterminée les unes par rapport aux autres, le dispositif de déviation de faisceau (10) étant configuré pour pouvoir être incliné autour d'un centre optique (181) du dispositif de déviation de faisceau (10) de telle sorte que l'orientation relative prédéterminée des multiples surfaces de réflexion (14, 16) soit maintenue, et l'orientation relative des multiples surfaces de réflexion (14, 16) étant réglée de manière à produire un angle de déviation prédéterminé pour le faisceau dévié;
dans lequel
- le dispositif de déviation de faisceau (10) est configuré de telle sorte qu'une variation de l'angle de déviation prédéterminé du faisceau soit nulle ou limitée à un écart maximal prédéterminé lorsque le dispositif de déviation de faisceau (10) est incliné autour du centre optique (181) dans une plage angulaire prédéterminée d'un angle d'inclinaison (102); et
- le dispositif de déviation de faisceau (10) est configuré de telle sorte qu'une variation des propriétés géométriques du faisceau réfléchi (12b) soit nulle ou limitée à un écart maximal prédéterminé lorsque le dispositif de déviation de faisceau (10) est incliné autour du centre optique (181) dans une plage angulaire prédéterminée d'un angle d'inclinaison (102); et
- au moins une surface de réflexion (14, 16) parmi les multiples surfaces de réflexion (14, 16) comprend une fonctionnalité destinée à modifier une caractéristique du faisceau réfléchi (12b) en dépendant de l'angle d'inclinaison (102) du dispositif de déviation de faisceau (10) autour du centre optique (181),
dans lequel la fonctionnalité destinée à modifier une caractéristique du faisceau réfléchi (12b) est assurée par un ou plusieurs des éléments fonctionnels (18) suivants compris par l'au moins une surface de réflexion (14) parmi les multiples surfaces de réflexion (14, 16) :
- un agencement d'interférence, comprenant de préférence plusieurs couches d'interférence;
- un élément de filtre spectral interférentiel, comprenant de préférence un élément de filtre interférentiel métallique;
- un miroir dichroïque;
- un élément diffractif, comprenant de préférence un réseau disposé au niveau de la surface de réflexion respective et/ou un réseau holographique volumique;
- un élément réfractif présentant un indice de réfraction prédéterminé; et
- un élément d'absorption.

2. Dispositif de déviation de faisceau (10) selon la revendication 1, dans lequel :
- les multiples surfaces de réflexion (14, 16) comprennent une première surface de réflexion (14) s'étendant dans un premier plan de réflexion (140) et une deuxième surface de réflexion (16) s'étendant dans un deuxième plan de réflexion (160);
- le premier plan de réflexion (140) et le deuxième plan de réflexion (160) présentent un axe d'intersection commun (180) et sont disposés de telle sorte qu'un angle d'ouverture (102) entre le premier plan de réflexion (140) et le deuxième plan de réflexion (160) corresponde à la moitié de l'angle de déviation prédéterminé; et
- le centre optique (181) correspond à l'axe d'intersection commun (180) ou est basé sur l'axe d'intersection commun (180).

3. Dispositif de déviation de faisceau (10) selon la revendication 1 ou 2, dans lequel les multiples surfaces de réflexion (14, 16) comprennent au moins un réflecteur en toit (38, 40) présentant deux surfaces de réflexion qui se coupent suivant un axe d'intersection de réflecteur en toit (190).

4. Dispositif de déviation de faisceau (10) selon la revendication 1, dans lequel les multiples surfaces de réflexion comprennent deux réflecteurs en toit (38, 40) présentant chacun deux surfaces de réflexion qui se coupent suivant un axe d'intersection de réflecteur en toit (190) respectif, les axes d'intersection de réflecteur en toit (190) des deux réflecteurs en toit (38, 40) se coupant en un point d'intersection, et le centre optique (181) correspondant à le point d'intersection ou étant basé sur le point d'intersection.

5. Dispositif de déviation de faisceau (10) selon la revendication 1, dans lequel la caractéristique du faisceau réfléchi (12b) modifiée par la fonctionnalité de l'au moins une surface de réflexion parmi les multiples surfaces de réflexion (14, 16) comprend une ou plusieurs des propriétés de faisceau suivantes :
- une plage spectrale du faisceau réfléchi (12b);
- une longueur d'onde centrale du faisceau réfléchi (12b);
- une figure de diffraction du faisceau réfléchi (12b);
- un type de polarisation du faisceau réfléchi (12b);
- une direction de polarisation du faisceau réfléchi (12b); et
- une puissance et/ou une intensité du faisceau réfléchi (12b).

6. Dispositif de déviation de faisceau (10) selon l'une quelconque des revendications précédentes, dans lequel le dispositif de déviation de faisceau (10) est configuré de telle sorte que la fonctionnalité de l'au moins une surface de réflexion parmi les multiples deuxièmes surfaces de réflexion (14, 16), destinée à modifier une caractéristique du faisceau réfléchi (12b), dépende d'un angle d'inclinaison (102) selon lequel le dispositif de déviation de faisceau (10) est incliné autour du centre optique (181).

7. Dispositif de déviation de faisceau (10) selon l'une quelconque des revendications précédentes, dans lequel le dispositif de déviation de faisceau (10) est en outre configuré de telle sorte que la fonctionnalité de l'au moins une surface de réflexion parmi les multiples deuxièmes surfaces de réflexion (14, 16), destinée à modifier une caractéristique du faisceau réfléchi (180), dépende de la position à laquelle le faisceau (12) se coupent l'au moins une surface de réflexion parmi les multiples surfaces d'intersection (14, 16).

8. Dispositif de déviation de faisceau (10) selon l'une quelconque des revendications précédentes, comprenant en outre une unité de support destinée à supporter les multiples surfaces de réflexion (14, 16), l'unité de support étant configurée pour incliner les multiples surfaces de réflexion (14, 16) autour du centre optique (181), et l'unité de support étant de préférence en outre configurée pour déplacer les multiples surfaces de réflexion (14, 16, 20, 22) en translation perpendiculairement à un axe correspondant au centre optique (181) ou s'étendant à travers le centre optique (181).

9. Dispositif de déviation de faisceau (10) selon l'une quelconque des revendications précédentes, dans lequel le centre optique :
- correspond à ou est basé sur un axe d'intersection commun (180) de deux surfaces de réflexion ou plus parmi les multiples surfaces de réflexion (14, 16), ou de plans de réflexion (140, 160) dans lesquels les surfaces de réflexion respectives (14, 16) s'étendent, respectivement; ou
- correspond à ou est basé sur un point d'intersection d'au moins deux axes d'intersection de réflecteur en toit (190) de réflecteurs en toit (38, 40) parmi les multiples surfaces de réflexion (14, 16), ou à un axe s'étendant à travers le point d'intersection.

10. Dispositif de déviation de faisceau (10) selon la revendication 9, dans lequel un volume entre les multiples surfaces de réflexion présente au moins partiellement un indice de réfraction s'écartant d'un indice de réfraction d'un environnement du dispositif de déviation de faisceau (10), et dans lequel le centre optique s'écarte de l'axe d'intersection commun (180) des deux surfaces de réflexion ou plus (14, 16) ou du point d'intersection d'au moins deux axes d'intersection de réflecteur en toit (190) d'une manière telle qu'un écart d'un trajet optique du faisceau dévié dû à la réfraction optique dans le volume entre les multiples surfaces de réflexion (14, 16) soit au moins partiellement compensé.

11. Dispositif de déviation de faisceau (10) selon la revendication 9 ou 10, dans lequel le réglage du dispositif de déviation de faisceau (10) de telle sorte que la variation de l'angle de déviation prédéterminé du faisceau soit nulle ou limitée à un écart maximal prédéterminé est basé sur le réglage d'une position du centre optique du dispositif de déviation de faisceau (10) par rapport aux multiples surfaces de réflexion (14, 16).

12. Utilisation d'un dispositif de déviation de faisceau (10) selon l'une quelconque des revendications précédentes pour atténuer et/ou filtrer spectralement un faisceau (12) dévié par le dispositif de déviation de faisceau (10).

13. Dispositif de filtre spectral (24) destiné à filtrer spectralement et à dévier un faisceau selon un angle de déviation prédéterminé, le dispositif de filtre spectral (24) comprenant un dispositif de déviation de faisceau (10) selon l'une quelconque des revendications 1 à 11, dans lequel la fonctionnalité destinée à modifier une caractéristique du faisceau réfléchi (12b) comprend le filtrage spectral du faisceau réfléchi (12b), et dans lequel le dispositif de filtre spectral (24) est configuré pour faire varier le filtrage spectral du faisceau en inclinant le dispositif de déviation de faisceau par rapport à un axe de propagation du faisceau.

14. Caméra multispectrale (36) destinée à capturer séquentiellement des images dans différentes plages spectrales, **caractérisée en ce que** la caméra multispectrale (36) comprend au moins un dispositif de filtre spectral (24) selon la revendication 13 pour filtrer spectralement la lumière à capturer sous forme d'image.
